# EUROPEAN PATENT APPLICATION

(11) **EP 4 560 470 A1**
(43) Date of publication of application: **28.05.2025**
(21) Application number: 23849123.7
(22) Date of filing: 30.06.2023
(51) Int. Cl.: G06F 9/48

(54) **COLLABORATIVE SCHEDULING METHOD AND RELATED DEVICE**

(30) Priority: 01.08.2022 CN 202210914711
(71) Applicant: Huawei Technologies Co., Ltd., Shenzhen, Guangdong 518129 (CN)
(72) Inventor: LI, Haicheng, Shenzhen, Guangdong 518129 (CN); LU, Xu, Shenzhen, Guangdong 518129 (CN); YU, Zhibin, Shenzhen, Guangdong 518129 (CN); YU, Zenghui, Shenzhen, Guangdong 518129 (CN)
(74) Representative: Pfenning, Meinig & Partner mbB
(86) International application number: PCT/CN2023/104622
(87) International publication number: WO 2024/027413

(57) **Abstract**

Embodiments of this application provide a coordinated scheduling method and a related device. The method includes: receiving first information through a first interface in a first running environment, where the first information includes computing capacity information of a first task; when the computing capacity information of the first task does not match computing capacity information of a first processing unit, determining, in the first running environment, a second processing unit based on the computing capacity information of the first task; and running, in the first running environment, the first processing unit by using the second processing unit. The first processing unit is configured to run, in a second running environment, the first task. According to the method, a computing capacity requirement of the second running environment may be synchronized in real time in the first running environment and the second running environment, to perform coordinated scheduling on processing units in the first running environment and the second running environment quickly and accurately, and further improve computing performance of a computing device.

## Description

This application claims priority to Chinese Patent Application No. 202210914711.4, filed with the China National Intellectual Property Administration on August 1, 2022 and entitled "COORDINATED SCHEDULING METHOD AND RELATED DEVICE", which is incorporated herein by reference in its entirety.

### TECHNICAL FIELD

Embodiments of this application relate to the computer field, and more specifically, to a coordinated scheduling method, a computing apparatus, a computing device, a chip system, and a computer-readable storage medium.

### BACKGROUND

With explosive growth of data in cloud and Internet scenarios, a proportion of unstructured data increases greatly, and service features of upper-layer applications in computing devices also change accordingly. Currently, a mainstream load feature of the computing devices evolves from being central processing unit (central processing unit, CPU) intensive to being input/output (input/output, I/O) intensive. As service features of an application changes, a heterogeneous multi-core processor architecture becomes a mainstream in the computing devices. The heterogeneous multi-core processor architecture may implement significant horizontal expansion of a processor computing capacity through non-uniform memory access (non-uniform memory access, NUMA), and may be further applied to different application scenarios by using a big and little core asymmetric multiprocessor (asymmetric multiprocessor, AMP) architecture, further improving a computing capacity of a computing device. In NUMA technologies, each of a plurality of processors (for example, CPUs) in a computing device may quickly access a part of a memory, improving a memory access speed of the processor. In a big and little core AMP technology, some processors (big cores) in a computing device may be configured to handle a compute-intensive task, and some processors (little cores) may be configured to handle a lightweight task, to provide an excellent energy efficiency ratio for the computing device.

In a virtualization scenario, there are usually a plurality of running environments in a computing device, for example, a first running environment (for example, a physical running environment) and a second running environment (for example, a virtual running environment). Currently, a product of a quantity of instructions per clock (instructions per clock, IPC) that may be executed by a first processing unit (for example, a virtual processor) in the second running environment and a utilization rate of the first processing unit may be calculated, and whether the first processing unit needs to be migrated from a third processing unit (for example, a physical little core processor) in the first running environment to a second processing unit (for example, a physical big core processor) in the first running environment for running may be determined based on the product. However, in this method, an actual computing capacity requirement of the first processing unit is predicted by using historical data of the first processing unit. The method has prediction errors and is error-prone. Alternatively, currently, the first processing unit (for example, a virtual little core processor) in the second running environment may run only on a third processing unit (for example, a physical little core processor) in the first running environment by using a static configuration method, and a fourth processing unit (for example, a virtual big core processor) in the second running environment may run only on a second processing unit (for example, a physical big core processor) in the first running environment. However, in the method, in a running process of the first processing unit or the fourth processing unit, scheduling configuration of the first processing unit or the fourth processing unit may not be changed. Therefore, scheduling adjustment may not be performed in time when a computing capacity requirement of a thread in the first processing unit or the fourth processing unit changes. In other words, in the foregoing methods, a computing capacity requirement of the second running environment may not be determined in the first running environment in real time, and a processing unit in the first running environment or the second running environment may not be quickly and accurately scheduled. Consequently, a thread in the second running environment may not run on a processing unit with an appropriate computing capacity, and maximum computing energy efficiency of hardware in the computing device may not be implemented.

Therefore, how to determine, in the first running environment, the computing capacity requirement of the second running environment in real time, to schedule the processing unit in the first running environment or the second running environment quickly and accurately becomes an urgent problem to be resolved.

### SUMMARY

Embodiments of this application provide a coordinated scheduling method, a computing apparatus, a computing device, a chip system, and a computer-readable storage medium, to synchronize, in the first running environment and the second running environment, a computing capacity requirement of the second running environment in real time, to perform coordinated scheduling on a processing unit in the first running environment or the second running environment quickly and accurately, and further effectively improve computing performance of a computing device.

According to a first aspect, a coordinated scheduling method is provided. The method includes: receiving first information through a first interface in a first running environment; when the computing capacity information of the first task does not match computing capacity information of a first processing unit, determining, in the first running environment, a second processing unit based on the computing capacity information of the first task; and running, in the first running environment, the first processing unit by using the second processing unit.

The first information includes computing capacity information of a first task. The first task is a task to be run on a first processing unit in a second running environment, and the computing capacity information of the first task indicates a minimum computing capacity of a processing unit that runs the first task. The computing capacity information of the first processing unit is determined based on computing capacity information of a third processing unit, and the third processing unit is configured to run, in the first running environment, the first processing unit.

In this embodiment of this application, a computing device may transfer computing capacity information of a task in the second running environment to the first running environment in real time through the first interface, to help the computing device schedule a processing unit in the first running environment, and further meet a computing capacity requirement of the second running environment. According to the method in this embodiment of this application, the computing device may synchronize, in the first running environment and the second running environment, the computing capacity requirement of the second running environment in real time, to perform coordinated scheduling on the processing units in the first running environment and the second running environment quickly and accurately, and further improve computing performance of the computing device.

With reference to the first aspect, in some implementations of the first aspect, the first interface includes a hypercall (hypercall) interface.

In this embodiment of this application, the computing device may transfer the computing capacity information of the task in the second running environment to the first running environment through the hypercall interface, to help the computing device perform coordinated scheduling on the processing units in the first running environment and the second running environment based on the computing capacity requirement of the second running environment.

With reference to the first aspect, in some implementations of the first aspect, it is determined, in the second running environment, that the computing capacity information of the first task does not match the computing capacity information of the first processing unit; and the first interface is called in the second running environment, to switch from the second running environment to the first running environment.

In this embodiment of this application, when determining that the computing capacity information of the first task does not match the computing capacity information of the first processing unit, the computing device may transfer the computing capacity information of the first task to the first running environment through the first interface. In other words, the computing device implements a transparent transmission channel of the computing capacity information of the first task. According to the method in this embodiment of this application, frequent switching between the first running environment and the second running environment by the computing device may be avoided, and therefore a performance loss caused by switching may be avoided.

With reference to the first aspect, in some implementations of the first aspect, the method further includes: updating, in the first running environment, the computing capacity information of the first processing unit based on computing capacity information of the second processing unit.

In this embodiment of this application, the computing capacity information of the first processing unit may be updated based on the second processing unit that currently runs the first processing unit, to help the computing device synchronize, in the first running environment and the second running environment, the computing capacity information of the first processing unit in time.

With reference to the first aspect, in some implementations of the first aspect, the computing capacity information of the first processing unit is stored in a shared memory, and the shared memory is accessed by a computing device running in the first running environment or the second running environment.

In this embodiment of this application, the shared memory is set in the computing device, so that the computing device may access the shared memory regardless of whether the computing device is in the first running environment or the second running environment, to further obtain the computing capacity information of the first processing unit in the second running environment.

With reference to the first aspect, in some implementations of the first aspect, the shared memory includes a model-specific register MSR or a system register.

In this embodiment of this application, a memory sharing function may be implemented by using the MSR or the system register, so that the computing device may obtain, in both the first running environment and the second running environment by using the MSR or the system register, the computing capacity information of the first processing unit.

With reference to the first aspect, in some implementations of the first aspect, first computing capacity information of the first processing unit is obtained based on a second interface in the second running environment; when second computing capacity information of the first processing unit does not match the first computing capacity information, a fourth processing unit is determined in the second running environment based on computing capacity information of a second task and the first computing capacity information; and the second task is run in the second running environment by using the fourth processing unit.

The first computing capacity information of the first processing unit is determined based on the computing capacity information of the second processing unit. The second computing capacity information is determined based on computing capacity information of the third processing unit. The second task is a task to be run on the first processing unit.

In this embodiment of this application, the computing device may transfer, to the second running environment in real time through the second interface, information that the processing unit in the first running environment or the second running environment has been rescheduled, to help schedule a thread in the second running environment in time. According to the method in this embodiment of this application, the computing device may synchronize, in the first running environment and the second running environment in real time, the computing capacity information of the processing unit, to perform coordinated scheduling on the processing units in the first running environment and the second running environment quickly and accurately, and further improve computing performance of the computing device.

With reference to the first aspect, in some implementations of the first aspect, the second interface includes a virtual interrupt or a virtual advanced configuration and power management interface ACPI event, and the virtual interrupt or the virtual ACPI event indicates that the computing capacity information of the first processing unit is updated.

In this embodiment of this application, the computing device may transfer, to the second running environment by using the virtual interrupt or the virtual ACPI event, information that the computing capacity information of the first processing unit is updated, to help the computing device determine, in the second running environment, whether some threads to be run on the first processing unit need to be rescheduled, so that each thread in the second running environment may run on a processing unit with an appropriate computing capacity.

With reference to the first aspect, in some implementations of the first aspect, the first computing capacity information is updated to first storage space in the second running environment.

In this embodiment of this application, the computing device may store the computing capacity information of the first processing unit in the first storage space in the second running environment, and may further update the computing capacity information of the first processing unit in the first storage space when the computing capacity information of the first processing unit is updated. According to the method in this embodiment of this application, the computing device may obtain the computing capacity information of the first processing unit from the first storage space in the second running environment, to help determine in real time whether the computing capacity requirement of the second running environment is met, and further perform scheduling in time.

With reference to the first aspect, in some implementations of the first aspect, it is determined, in the first running environment, that the first computing capacity information does not match the second computing capacity information; and the second interface is called in the first running environment, to switch from the first running environment to the second running environment.

In this embodiment of this application, when determining that the first computing capacity information does not match the second computing capacity information, the computing device may transfer, to the second running environment through the second interface, information that the computing capacity information of the first processing unit is updated. In other words, the computing device implements a notification channel for updating the computing capacity information. According to the method in this embodiment of this application, frequent switching between the first running environment and the second running environment by the computing device may be avoided, and therefore a performance loss caused by switching may be avoided.

With reference to the first aspect, in some implementations of the first aspect, the first computing capacity information and the second computing capacity information are stored in a shared memory, and the shared memory is accessed by a computing device running in the first running environment or the second running environment.

In this embodiment of this application, the shared memory is set in the computing device, so that the computing device may update the computing capacity information of the first processing unit in the shared memory in time, that is, update the second computing capacity information to the first computing capacity information. According to the method in this embodiment of this application, the computing device may also obtain, in the second running environment, updated computing capacity information of the first processing unit, so that some threads in the first processing unit may be rescheduled in time.

With reference to the first aspect, in some implementations of the first aspect, the shared memory includes a model-specific register MSR or a system register.

In this embodiment of this application, a memory sharing function may be implemented by using the MSR or the system register, so that the computing device may obtain, in the second running environment by using the MSR or the system register, the updated computing capacity information of the first processing unit, namely, the first computing capacity information.

According to a second aspect, a coordinated scheduling method is provided. The method includes: obtaining first computing capacity information of the first processing unit based on a second interface in the second running environment; when second computing capacity information of the first processing unit does not match the first computing capacity information; determining, in the second running environment, a fourth processing unit based on computing capacity information of a second task and the first computing capacity information; and running, in the second running environment, the second task by using the fourth processing unit.

The first computing capacity information of the first processing unit is determined based on the computing capacity information of the second processing unit. The second computing capacity information is determined based on computing capacity information of the third processing unit. The second task is a task to be run on the first processing unit.

In this embodiment of this application, the computing device may transfer, to the second running environment in real time through the second interface, information that the processing unit in the first running environment or the second running environment has been rescheduled, to help schedule a thread in the second running environment in time. According to the method in this embodiment of this application, the computing device may synchronize, in the first running environment and the second running environment in real time, the computing capacity information of the processing unit, to perform coordinated scheduling on the processing units in the first running environment and the second running environment quickly and accurately, and further improve computing performance of the computing device.

With reference to the second aspect, in some implementations of the second aspect, the second interface includes a virtual interrupt or a virtual advanced configuration and power management interface ACPI event, and the virtual interrupt or the virtual ACPI event indicates that the computing capacity information of the first processing unit is updated.

In this embodiment of this application, the computing device may transfer, to the second running environment by using the virtual interrupt or the virtual ACPI event, information that the computing capacity information of the first processing unit is updated, to help the computing device determine, in the second running environment, whether some threads need to be rescheduled, so that each thread in the second running environment may run on a processing unit with an appropriate computing capacity.

With reference to the second aspect, in some implementations of the second aspect, the first computing capacity information is updated to first storage space in the second running environment.

In this embodiment of this application, the computing device may store the computing capacity information of the first processing unit in the first storage space in the second running environment, and may further update the computing capacity information of the first processing unit in the first storage space when the computing capacity information of the first processing unit is updated. According to the method in this embodiment of this application, the computing device may obtain the computing capacity information of the first processing unit from the first storage space in the second running environment, to help determine in real time whether the computing capacity requirement of the second running environment is met, and further perform scheduling in time.

With reference to the second aspect, in some implementations of the second aspect, it is determined, in the first running environment, that the first computing capacity information does not match the second computing capacity information; and the second interface is called in the first running environment, to switch from the first running environment to the second running environment.

In this embodiment of this application, when determining that the first computing capacity information does not match the second computing capacity information, the computing device may transfer, to the second running environment through the second interface, information that the computing capacity information of the first processing unit is updated. In other words, the computing device implements a notification channel for updating the computing capacity information. According to the method in this embodiment of this application, frequent switching between the first running environment and the second running environment by the computing device may be avoided, and therefore a performance loss caused by switching may be avoided.

With reference to the second aspect, in some implementations of the second aspect, the first computing capacity information and the second computing capacity information are stored in a shared memory, and the shared memory is accessed by a computing device running in the first running environment or the second running environment.

In this embodiment of this application, the shared memory is set in the computing device, so that the computing device may update the computing capacity information of the first processing unit in the shared memory in time, that is, update the second computing capacity information to the first computing capacity information. According to the method in this embodiment of this application, the computing device may also obtain, in the second running environment, updated computing capacity information of the first processing unit, so that some threads in the first processing unit may be rescheduled in time.

With reference to the second aspect, in some implementations of the second aspect, the shared memory includes a model-specific register MSR or a system register.

In this embodiment of this application, a memory sharing function may be implemented by using the MSR or the system register, so that the computing device may obtain, in the second running environment by using the MSR or the system register, the updated computing capacity information of the first processing unit, namely, the first computing capacity information.

According to a third aspect, an embodiment of this application provides a computing apparatus. The computing apparatus includes units configured to implement the first aspect or any one of the possible implementations of the first aspect.

According to a fourth aspect, an embodiment of this application provides a computing apparatus. The computing apparatus includes units configured to implement the second aspect or any one of the possible implementations of the second aspect.

According to a fifth aspect, an embodiment of this application provides a computer device. The computer device includes a processor. The processor is configured to: be coupled to a memory, and read and execute instructions and/or program code in the memory, to perform the first aspect or any one of the possible implementations of the first aspect, or perform the second aspect or any one of the possible implementations of the second aspect.

According to a sixth aspect, an embodiment of this application provides a chip system. The chip system includes a logic circuit. The logic circuit is configured to: be coupled to an input/output interface, and transmit data through the input/output interface, to perform the first aspect or any one of the possible implementations of the first aspect, or perform the second aspect or any one of the possible implementations of the second aspect.

According to a seventh aspect, an embodiment of this application provides a computer-readable storage medium. The computer-readable storage medium stores program code, and when the computer storage medium runs on a computer, the computer is enabled to perform the first aspect or any one of the possible implementations of the first aspect, or perform the second aspect or any one of the possible implementations of the second aspect.

According to an eighth aspect, an embodiment of this application provides a computer program product. The computer program product includes computer program code, and when the computer program code is run on a computer, the computer is enabled to perform the first aspect or any one of the possible implementations of the first aspect, or perform the second aspect or any one of the possible implementations of the second aspect.

### BRIEF DESCRIPTION OF DRAWINGS

FIG. 1 is a block diagram of a computing device 100;
FIG. 2 is a diagram of a system architecture of a coordinated scheduling method according to an embodiment of this application;
FIG. 3 is a schematic flowchart of a coordinated scheduling method according to an embodiment of this application;
FIG. 4 is a schematic flowchart of a coordinated scheduling method according to another embodiment of this application;
FIG. 5 is a schematic flowchart of a coordinated scheduling method according to another embodiment of this application;
FIG. 6 is a schematic flowchart of a coordinated scheduling method according to another embodiment of this application;
FIG. 7 is a diagram of a structure of a computing apparatus according to an embodiment of this application;
FIG. 8 is a diagram of a structure of a computing apparatus according to another embodiment of this application; and
FIG. 9 is a diagram of a structure of a computing device according to an embodiment of this application.

### DESCRIPTION OF EMBODIMENTS

The following describes technical solutions of embodiments in this application with reference to accompanying drawings.

The technical solutions in embodiments of this application may be applied to various computing devices having a heterogeneous multi-core processor architecture, for example, a computing device having a big and little core AMP architecture. This is not limited in embodiments of this application. The technical solutions in embodiments of this application may be further applied to a computing device having various processing units (processing units, PUs) heterogeneous computing platforms, for example, a computing device having an intelligence processing unit (intelligence processing unit, IPU) heterogeneous computing platform, a deep-learning processing unit (deep-learning processing unit, DPU) heterogeneous computing platform, or a neural network processing unit (neural network processing unit, NPU) heterogeneous computing platform. This is not limited in embodiments of this application.

For ease of understanding of embodiments of this application, several terms in this application are first briefly described.

### 1. Physical computing device

The physical computing device is a computing device that includes a tangible hardware device, has a complete hardware system function, and may perform data computing or program running.

### 2. Physical processing unit

The physical processing unit is a tangible hardware device, for example, may be hardware such as a physical central processing unit (physical central processing unit, pCPU) or a physical graphics processing unit (physical graphics processing unit, pGPU), and is responsible for processing data, running a program, or the like in the physical computing device. Each physical computing device may include one or more physical processing units. A computing capacity of each of the one or more physical processing units of each physical computing device may be the same or different. This is not limited in embodiments of this application. The physical processing unit may have two different running modes. In one running mode, the physical processing unit may run a virtual processing unit in the physical processing unit. In another running mode, the physical processing unit may run a process, a thread, or the like in a physical running environment.

### 3. Physical running environment

The physical running environment means a running environment of the physical computing device. In the physical running environment, the physical computing device may directly implement a function like data processing or program running by using the physical processing unit.

### 4. Virtual computing device (virtual machine)

The virtual computing device is a complete software-simulated computer system that has a complete hardware system function and that runs in an entirely isolated environment. All functions that may be implemented by the physical computing device may be implemented in the virtual computing device. The virtual computing device depends on the physical computing device, that is, the virtual computing device runs in the physical computing device. When the virtual computing device is created in the physical computing device, some storage space in the physical computing device needs to be allocated to the virtual computing device for use, that is, a portion of a storage device capacity of the physical computing device is used as a storage capacity of the virtual computing device. One or more virtual computing devices may be created in each physical computing device, and each virtual computing device has an independent virtual processing unit, independent storage space, and an independent operating system.

### 5. Virtual processing unit

The virtual processing unit is not a tangible hardware device. The virtual processing unit is responsible for functions such as data computing and program running in the virtual computing device. The virtual processing unit depends on the physical processing unit, that is, the virtual processing unit runs in the physical processing unit. That is, when the virtual processing unit calculates data or runs a program, the virtual processing unit actually calculates the data or runs the program in the physical processing unit that runs the virtual processing unit. Each physical processing unit may include one or more virtual processing units. Each virtual computing device may have one or more virtual processing units. A computing capacity of each of the one or more virtual processing units in each virtual computing device may be the same or different. This is not limited in embodiments of this application. That is, the plurality of processing units in each virtual computing device may execute a symmetric multiprocessor (symmetric multiprocessor, SMP) scheduling strategy, or plurality of the virtual processing units in each virtual computing device may execute an AMP scheduling strategy. This is not limited in embodiments of this application. The SMP scheduling strategy means performing non-differentiated task scheduling on the plurality of processing units based on a characteristic that computing capacities of processing units of a symmetric multiprocessor (SMP) are the same. The AMP scheduling strategy means performing differentiated task scheduling on the plurality of processing units based on a characteristic that computing capacities of processing units of an asymmetric multiprocessor (AMP) are different.

### 6. Virtual running environment

The virtual running environment means a running environment of the virtual computing device. In the virtual running environment, the virtual computing device may implement a function like data processing or program running by using the virtual processing unit.

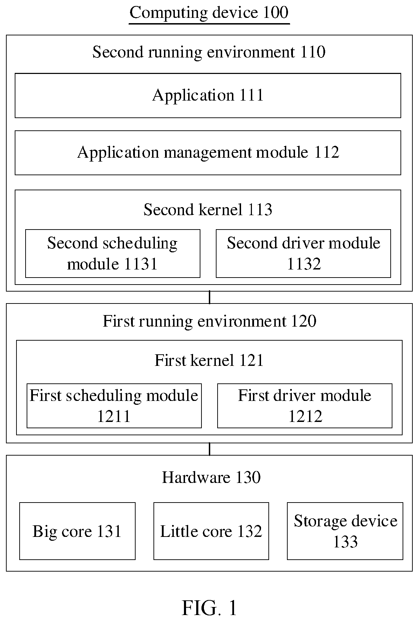

FIG. 1 is a block diagram of a computing device 100. The computing device 100 mainly includes a second running environment 110, a first running environment 120, and hardware 130. In some embodiments, the computing device 100 may include one or more second running environments 110. The following uses an example in which the computing device 100 includes one second running environment 110 for description.

The second running environment 110 may be a virtual running environment. The second running environment 110 may include an application 111, an application management module 112, and a second kernel 113. The application 111 may be an upper-layer application in the second running environment 110, for example, may be a communication application, or an entertainment application. The application management module 112 may manage scheduling strategies of various applications in the application 111. For example, the application management module 112 may set or adjust priorities of the various applications in the application 111, or computing capacities or computing resources required for running the applications. The second kernel 113 is a kernel in the second running environment 110, and is responsible for managing process or thread scheduling, a memory, a file, a network system, and a driver in the second running environment 110. The second kernel 113 includes a second scheduling module 1131 and a second driver module 1132. The second scheduling module 1131 may be responsible for managing process or thread scheduling in the second running environment 110. The second driver module 1132 may include a processor driver (for example, a CPU driver) and a device driver in the second running environment 110.

The first running environment 120 may be a physical running environment. The first running environment 120 may include a first kernel 121. The first kernel 121 is a kernel in the first running environment 120, and is responsible for managing process or thread scheduling, a memory, a file, a network system, and a driver in the first running environment 120. The first kernel 121 includes a first scheduling module 1211 and a first driver module 1212. The first scheduling module 1211 may be responsible for managing process or thread scheduling in the first running environment 120. The first driver module 1212 may include a virtualization driver, a processor driver (for example, a CPU driver), and a device driver in the first running environment 120.

The hardware 130 includes tangible hardware in the computing device 100. The hardware 130 may include a big core 131, a little core 132, and a storage device 133. The big core 131 may be a physical processor configured to handle a compute-intensive task, and the little core 132 may be a physical processor configured to handle a lightweight task. The storage device 133 may be responsible for storing data or instructions required in a running process of the big core 131 or the little core 132, and may be further responsible for storing a computation result of the big core 131 or the little core 132.

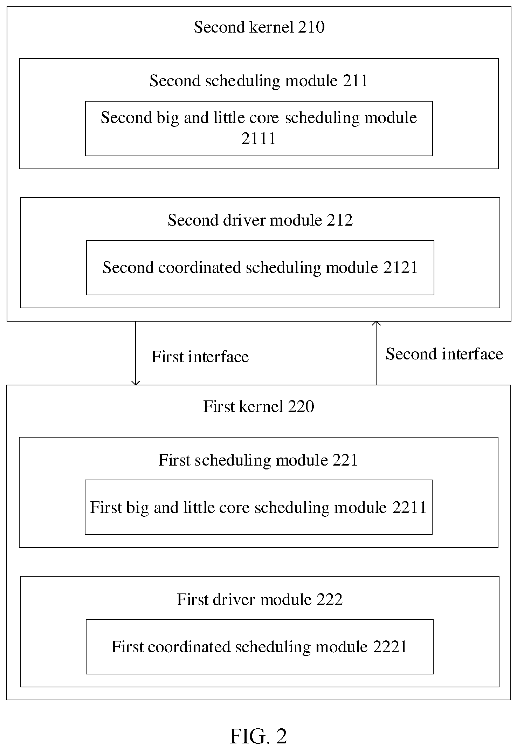

FIG. 2 is a diagram of a system architecture of a coordinated scheduling method according to an embodiment of this application. FIG. 2 may include a second kernel 210 and a first kernel 220.

The second kernel 210 in FIG. 2 may be the second kernel 113 in the second running environment 110 in FIG. 1. The second kernel 210 may include a second scheduling module 211 and a second driver module 212.

The second scheduling module 211 may be responsible for managing task scheduling in the second running environment 110 in FIG. 1. The second scheduling module 211 may include a second big and little core scheduling module 2111.

It should be understood that a task in the second running environment may include a process or a thread in the second running environment. The following uses an example in which the task includes a thread for description. It should be further understood that a method used when the task includes a process is similar to a method used when the task includes a thread. In other words, the method in this embodiment of this application may also be performed when the task includes a process.

In some embodiments, the second big and little core scheduling module 2111 may implement a thread type configuration interface in the second running environment 110, and provide an application programming interface for configuring a scheduling strategy of a thread or an application.

In some embodiments, the second big and little core scheduling module 2111 may obtain an application scheduling strategy in the application management module 112 in FIG. 1, and may determine computing capacity information of each thread of each application based on an application scheduling strategy of each application, that is, determine a computing capacity required for running each thread, or determine a computing capacity requirement of each thread. Each application may include one or more threads. In other words, the second big and little core scheduling module 2111 may determine a computing speed or a computing capacity that should be required by a processing unit responsible for running each thread. The second big and little core scheduling module 2111 may further transfer the computing capacity information of each thread to a second coordinated scheduling module 2121. The second big and little core scheduling module 2111 may further store the computing capacity information of each thread.

For example, the second big and little core scheduling module 2111 may determine, based on a scheduling strategy of a first application to be run on a first processing unit, computing capacity information of a first thread of the first application. The second big and little core scheduling module 2111 may further transfer the computing capacity information of the first thread to the second coordinated scheduling module 2121. The first processing unit is a processing unit in the second running environment 110 in FIG. 1.

In some embodiments, the second big and little core scheduling module 2111 may further store computing capacity information of each of one or more processing units in the second running environment 110 in FIG. 1. In addition, the second big and little core scheduling module 2111 may further receive first notification information of the second coordinated scheduling module 2121. The first notification information may include updated computing capacity information of the one or more processing units. The second big and little core scheduling module 2111 may update the stored computing capacity information of the processing unit based on the first notification information. The second big and little core scheduling module 2111 may further schedule and migrate a thread to be run on the processing unit based on computing capacity information of the thread and the updated computing capacity information of the processing unit, so that each thread may run on a processing unit that meets a computing capacity requirement of the thread.

For example, the second big and little core scheduling module 2111 may store second computing capacity information of the first processing unit and second computing capacity information of a fourth processing unit. The fourth processing unit is a processing unit in the second running environment 110 in FIG. 1. The second big and little core scheduling module 2111 may receive first computing capacity information of the first processing unit. The first computing capacity information is updated computing capacity information of the first processing unit. The second big and little core scheduling module 2111 may update the stored second computing capacity information of the first processing unit to the first computing capacity information, and determine the fourth processing unit based on computing capacity information of a second thread and the first computing capacity information. The second thread is a thread to be run on the first processing unit. When the computing capacity information of the second thread matches the first computing capacity information, the fourth processing unit is the same as the first processing unit. When the computing capacity information of the second thread does not match the first computing capacity information, the fourth processing unit is different from the first processing unit, and the second computing capacity information of the fourth processing unit matches the computing capacity information of the second thread. When the fourth processing unit is different from the first processing unit, the second big and little core scheduling module 2111 may migrate the second thread to the fourth processing unit for running.

In some embodiments, the second big and little core scheduling module 2111 may further perform load balancing, that is, reallocate or adjust, for each thread based on meeting the computing capacity requirement of each thread, a processing unit that runs the thread, to balance a load in the second running environment 110 in FIG. 1.

The second driver module 212 may include a processor driver and a device driver in the second running environment 110 in FIG. 1. The second driver module 212 may include the second coordinated scheduling module 2121.

In some embodiments, the second coordinated scheduling module 2121 may receive the computing capacity information that is of each thread and that is transferred by the second big and little core scheduling module 2111, and may obtain, from a shared memory, computing capacity information of the processing unit that runs each thread. The second coordinated scheduling module 2121 may further determine whether the computing capacity information of each thread matches the computing capacity information of the processing unit that runs each thread. When determining that the computing capacity information of each thread matches the computing capacity information of the processing unit that runs each thread, the second coordinated scheduling module 2121 may drive the processing unit to run the thread. When determining that the computing capacity information of each thread does not match the computing capacity information of the processing unit that runs each thread, the second coordinated scheduling module 2121 may call a first interface to switch a computing device from the second running environment 110 to the first running environment 120, so that the computing device may schedule a processing unit in the first running environment 120 or the second running environment 110, meeting the computing capacity requirement of each thread. The second coordinated scheduling module 2121 may further include the computing capacity requirement of the thread in the first interface as a parameter.

For example, the second coordinated scheduling module 2121 may receive the computing capacity information of the first thread from the second big and little core scheduling module 2111, and may obtain the computing capacity information of the first processing unit from the shared memory. The computing capacity information of the first processing unit is determined based on computing capacity information of a third processing unit. The third processing unit is a processing unit that actually runs, in the first running environment 120 in FIG. 1, the first processing unit. The second coordinated scheduling module 2121 may further determine whether the computing capacity information of the first thread matches the computing capacity information of the first processing unit. When determining that the computing capacity information of the first thread matches the computing capacity information of the first processing unit, the second coordinated scheduling module 2121 may drive the first processing unit to run the first thread. When determining that the computing capacity information of the first thread does not match the computing capacity information of the first processing unit, the second coordinated scheduling module 2121 may call the first interface, so that the computing device switches from the second running environment 110 in FIG. 1 to the first running environment 120. In addition, the first interface may include first information, where the first information includes the computing capacity information of the first thread.

In some embodiments, the second coordinated scheduling module 2121 may read, from the shared memory based on a second interface, updated computing capacity information of each processing unit in the second running environment 110 in FIG. 1. The second coordinated scheduling module 2121 may further send the first notification information to the second big and little core scheduling module 2111. The first notification information includes the updated computing capacity information of the processing unit. The first notification information may be used to notify the second big and little core scheduling module 2111 to update the computing capacity information of the processing unit, or may be used to notify the second big and little core scheduling module 2111 to schedule and migrate a thread.

For example, the second coordinated scheduling module 2121 may read the first computing capacity information of the first processing unit from the shared memory based on the second interface. The second coordinated scheduling module 2121 may further send the first notification information to the second big and little core scheduling module 2111. The first notification information includes the first computing capacity information of the first processing unit.

In some embodiments, after obtaining the updated computing capacity information of the processing unit, the second coordinated scheduling module 2121 may determine whether computing capacity information of a thread to be run on each processing unit matches the updated computing capacity information of the processing unit. When determining that the computing capacity information of the thread to be run on each processing unit matches the updated computing capacity information of the processing unit, the second coordinated scheduling module 2121 may drive the processing unit to run the thread. When determining that the computing capacity information of the thread to be run on each processing unit does not match the updated computing capacity information of the processing unit, the second coordinated scheduling module 2121 may send the first notification information to the second big and little core scheduling module 2111. The first notification information includes the updated computing capacity information of the processing unit. The first notification information is used to notify the second big and little core scheduling module 2111 to update the computing capacity information of the processing unit, or may be used to notify the second big and little core scheduling module 2111 to schedule and migrate a thread.

For example, the second coordinated scheduling module 2121 may determine whether the computing capacity information of the second thread matches the first computing capacity information of the first processing unit. The second thread is a thread to be run on the first processing unit. When determining that the computing capacity information of the second thread matches the first computing capacity information of the first processing unit, the second coordinated scheduling module 2121 may drive the first processing unit to run the second thread. When determining that the computing capacity information of the second thread does not match the first computing capacity information of the first processing unit, the second coordinated scheduling module 2121 may send the first notification information to the second big and little core scheduling module 2111. The first notification information includes the first computing capacity information of the first processing unit, namely, the updated computing capacity information of the first processing unit.

The first kernel 220 in FIG. 2 may be the first kernel 121 in the first running environment 120 in FIG. 1. The first kernel 220 may include a first scheduling module 221 and a first driver module 222.

The first scheduling module 221 may be responsible for managing process scheduling and thread scheduling in the first running environment 120 in FIG. 1. The first scheduling module 221 may include a first big and little core scheduling module 2211.

In some embodiments, the first big and little core scheduling module 2211 may be responsible for scheduling, in the first running environment 120, a processing unit in the second running environment 110 to run on a big core 131 or a little core 132 of hardware 130.

In some embodiments, the first big and little core scheduling module 2211 may receive second notification information from the first coordinated scheduling module 2221, where the second notification information includes computing capacity information of a thread in the second running environment 110. The first big and little core scheduling module 2211 may store computing capacity information of each processing unit in the second running environment 110. The first big and little core scheduling module 2211 may further store computing capacity information of each thread to be run on each processing unit in the second running environment 110. The first big and little core scheduling module 2211 may further determine, in the first running environment 120 based on the computing capacity information of each thread, a processing unit that may run the thread. The processing unit may run a processing unit that runs the thread in the second running environment 110.

For example, the first big and little core scheduling module 2211 may receive second notification information from the first coordinated scheduling module 2221, where the second notification information includes the computing capacity information of the first thread in the first processing unit. The first processing unit is a processing unit in the second running environment 110. The first big and little core scheduling module 2211 may store the computing capacity information of the first processing unit. The first big and little core scheduling module 2211 may further store the computing capacity information of the first thread. The first big and little core scheduling module 2211 may determine a second processing unit in the first running environment 120 based on the computing capacity information of the first thread. The second processing unit may be configured to run the first processing unit, and computing capacity information of the second processing unit matches the computing capacity information of the first thread. That is, the first big and little core scheduling module 2211 may migrate the first processing unit from the third processing unit to the second processing unit for running, so that the first processing unit may meet a computing capacity requirement of the first thread when running the first thread.

In some embodiments, after receiving the second notification information from the first coordinated scheduling module 2221, the first big and little core scheduling module 2211 may determine whether the computing capacity information of the thread included in the second notification information matches computing capacity information of a processing unit that is about to run the thread. If the computing capacity information of the thread matches the computing capacity information of the processing unit that is about to run the thread, the computing device may perform an entry operation to switch from the first running environment 120 to the second running environment 110, to run the thread in the second running environment 110. If the computing capacity information of the thread does not match the computing capacity information of the processing unit that is about to run the thread, the first big and little core scheduling module 2211 may determine, in the first running environment 120 based on the computing capacity information of each thread, a processing unit that may meet a computing capacity requirement of the thread.

For example, after receiving the second notification information from the first coordinated scheduling module 2221, the first big and little core scheduling module 2211 may determine whether the computing capacity information of the first thread matches the computing capacity information of the first processing unit. If the computing capacity information of the first thread matches the computing capacity information of the first processing unit, the computing device may perform an entry operation to switch from the first running environment 120 to the second running environment 110. If the computing capacity information of the first thread does not match the computing capacity information of the first processing unit, the first big and little core scheduling module 2211 may determine the second processing unit based on the computing capacity information of the first thread, and migrate the first processing unit to the second processing unit for running.

In some embodiments, the first big and little core scheduling module 2211 may migrate a processing unit in the second running environment 110 from one processing unit in the first running environment 120 to another processing unit for running. The first big and little core scheduling module 2211 may further determine whether updated computing capacity information of the processing unit in the second running environment 110 matches computing capacity information before update. The updated computing capacity information of the processing unit in the second running environment 110 may be determined based on the processing unit in the migrated first running environment 120 after migration. The computing capacity information of the processing unit in the second running environment 110 before update may be determined based on the processing unit in the first running environment 120 before migration. If it is determined that the updated computing capacity information of the processing unit in the second running environment 110 matches the computing capacity information before update, the processing unit in the second running environment 110 may run on the processing unit in the first running environment 120 after migration. If it is determined that the updated computing capacity information of the processing unit in the second running environment 110 does not match the computing capacity information before update, third notification information may be sent to the first coordinated scheduling module 2221. The third notification information includes updated the computing capacity information of the processing unit in the second running environment 110.

For example, the first big and little core scheduling module 2211 may migrate the first processing unit from the third processing unit to the second processing unit for running. The third processing unit and the second processing unit are processing units in the first running environment 120. The first big and little core scheduling module 2211 may determine whether the first computing capacity information of the first processing unit matches the second computing capacity information. The first computing capacity information of the first processing unit is determined based on the computing capacity information of the second processing unit. The second computing capacity information of the first processing unit is determined based on the computing capacity information of the third processing unit. If the first computing capacity information of the first processing unit matches the second computing capacity information, the first processing unit may run on the third processing unit. If the first computing capacity information of the first processing unit does not match the second computing capacity information, the first processing unit may send the third notification information to the first coordinated scheduling module 2221. The third notification information includes the first computing capacity information of the first processing unit.

The first driver module 222 may include a virtualization driver, a processor driver, and a device driver in the first running environment 120 in FIG. 2. The first driver module 222 may include the first coordinated scheduling module 2221.

In some embodiments, the first coordinated scheduling module 2221 may receive first information through the first interface, where the first information includes the computing capacity information of the thread in the second running environment 110. The first coordinated scheduling module 2221 may further send the second notification information to the first big and little core scheduling module 2211. The second notification information may include the computing capacity information of the thread. After receiving the third notification information from the first big and little core scheduling module 2211, the first coordinated scheduling module 2221 may further obtain updated computing capacity information of the processing unit that runs the thread, and update the computing capacity information of the processing unit in the shared memory.

For example, the first coordinated scheduling module 2221 may obtain the computing capacity information of the first thread based on the first interface. The first coordinated scheduling module 2221 may further send the computing capacity information of the first thread to the first big and little core scheduling module 2211. After receiving the third notification information from the first big and little core scheduling module 2211, the first coordinated scheduling module 2221 may further obtain the updated computing capacity information of the first processing unit, and update the computing capacity information of the first processing unit in the shared memory.

In some embodiments, after receiving the third notification information from the first big and little core scheduling module 2211, the first coordinated scheduling module 2221 may call the second interface, to switch the computing device from the first running environment 120 to the second running environment 110. After switching to the second running environment 110, the computing device may schedule the thread, so that the processing unit in the second running environment 110 may meet the computing capacity requirement of each thread when executing each thread.

Optionally, the shared memory may be a model-specific register (model-specific register, MSR), or a system register (system register), or may be another type of shared storage device, for example, may be a random access memory (random access memory, RAM), a dynamic random access memory (dynamic random access memory, DRAM), or a static random access memory (static random access memory, SRAM). This is not limited in this embodiment of this application. The shared memory may be accessed by the second coordinated scheduling module 2121 and the first coordinated scheduling module 2221 in FIG. 2.

Optionally, the first interface may be a hypercall (hypercall) interface, or another type of interface. This is not limited in this embodiment of this application.

Optionally, the second interface may include a virtual interrupt or a virtual advanced configuration and power management interface (advanced configuration and power management interface, ACPI) event, or the second interface may be another type of interface, for example, an interface for accessing a special storage device or an offset address. Alternatively, the second interface may include another event. This is not limited in this embodiment of this application. The second interface or an event included in the second interface may indicate that the computing capacity information of the processing unit in the second running environment is updated. In other words, the virtual interrupt or the virtual ACPI event may indicate that the computing capacity information of the first processing unit is updated.

According to a system in FIG. 2, the computing capacity information of the thread in the second running environment may be synchronized in the first running environment and the second running environment of the computing device 100, that is, a computing capacity requirement of the second running environment is determined in real time in the first running environment, to perform coordinated scheduling on processing units in the first running environment and the second running environment quickly and accurately, and further improve computing performance of a computing device.

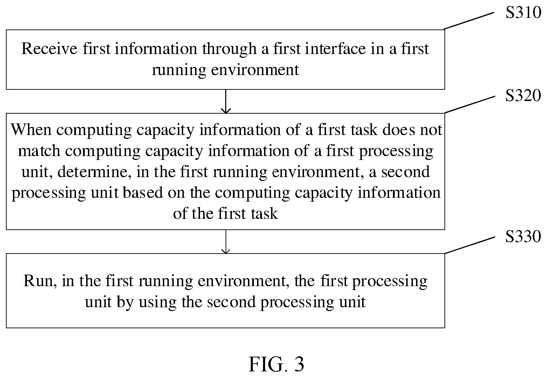

FIG. 3 is a schematic flowchart of a coordinated scheduling method according to an embodiment of this application. The method in FIG. 3 includes the following steps.

S310: Receive first information through a first interface in a first running environment.

A computing device may receive the first information through the first interface in the first running environment. The first information includes computing capacity information of a first task. The first task is a task to be run on a first processing unit in a second running environment, and the computing capacity information of the first task indicates a minimum computing capacity of a processing unit that runs the first task.

It should be understood that when the first running environment is a physical running environment, the second running environment may be a virtual running environment, and the first processing unit is a virtual processing unit. In addition, the first processing unit actually runs on a third processing unit in the first running environment. The third processing unit is a physical processing unit.

Optionally, before step S310, the computing device may perform step S301 or S302.

S301: Determine, in the second running environment, the computing capacity information of the first task.

Optionally, the first task may include a first process or a first thread. The first process is a process to be run on the first processing unit in the second running environment. The first thread is a thread to be run on the first processing unit in the second running environment. The following uses an example in which the first task includes the first thread for description.

It should be understood that a method used when the first task includes the first process is similar to a method used when the first task includes the first thread. For brevity of description, details are not described again.

Optionally, computing capacity information of the first thread to be run on the first processing unit may be determined based on a scheduling strategy of a first application to which the first thread belongs. In other words, the computing device may determine, in the second running environment, the computing capacity information of the first thread based on the scheduling strategy of the first application to be run on the first processing unit. The first thread belongs to the first application.

In some embodiments, the second running environment may include one or more applications, and each application may include one or more threads. The first application is any one of the one or more applications, and the first thread is any one of one or more threads of the first application. A scheduling strategy set by the computing device for each application may be the same or different. The scheduling strategy may include a priority of the application, a computing capacity or a computing resource required for running the application, and the like. The computing device may determine, based on a scheduling strategy of each application, computing capacity information of each thread of each application, that is, determine a computing capacity required for running each thread, or determine a computing capacity requirement of each thread. The computing capacity information of each thread may be a computing speed or a computing capacity that a processing unit needs to meet when running the thread, that is, the computing capacity information of each thread may indicate a minimum computing capacity of the processing unit that runs the thread.

Optionally, the computing capacity information of the first thread may be stored in first storage space in the second running environment. The first storage space is storage space allocated to the second running environment when the computing device creates the second running environment. The first storage space is some or all of second storage space in the first running environment.

In some embodiments, the computing capacity information of the first thread may be stored in a task structure of a second kernel in the second running environment. For example, a feature identification structure may be added to the task structure of the second kernel, to store the computing capacity information of the first thread.

In some embodiments, the computing capacity information of the first thread may be indicated by a value in a first preset value range. The first preset value range may be, for example, 0 and 1, from 0 to 256, or from 0 to 1024. This is not limited in this embodiment of this application. When the first preset value range is from 0 to 1024, the computing capacity information of the first thread may be any value in 0 to 1024. A larger value indicating the computing capacity information of the first thread indicates a larger computing capacity requirement of the first thread. Alternatively, a larger value indicating the computing capacity information of the first thread indicates a smaller computing capacity requirement of the first thread. This is not limited in this embodiment of this application.

It should be understood that a larger first preset value range indicates more accurate computing capacity information of the first thread. A smaller first preset value range indicates less accurate computing capacity information of the first thread.

S302: Determine, in the second running environment, whether the computing capacity information of the first task matches computing capacity information of the first processing unit.

Optionally, in the second running environment, the computing device may obtain the computing capacity information of the first processing unit based on a shared memory. In other words, the shared memory may store the computing capacity information of the first processing unit. The shared memory may be accessed by the computing device that runs in the second running environment or the first running environment, that is, the computing device may access the shared memory regardless of whether the computing device runs in the second running environment or the first running environment.

In some embodiments, the shared memory may be an MSR or a system register, or may be another type of shared storage device, for example, may be a RAM, a DRAM, or an SRAM. This is not limited in this embodiment of this application.

In some embodiments, the computing capacity information of the first processing unit may be determined based on an ACPI table or device tree source code (device tree source, DTS) configuration information for creating the second running environment by the computing device.

Optionally, the computing capacity information of the first processing unit may be stored in the first storage space in the second running environment.

In some embodiments, the computing capacity information of the first processing unit may be stored in a processing unit scheduling queue structure of the second kernel in the second running environment. For example, a big and little core computing capacity identification data structure may be added to a CPU scheduling queue structure of the second core, to store the computing capacity information of the first processing unit.

In some embodiments, the computing capacity information of the first processing unit may be indicated by a value in a second preset value range. The second preset value range may be, for example, 0 and 1, from 0 to 256, or from 0 to 1024. This is not limited in this embodiment of this application. When the second preset value range is from 0 to 1024, the computing capacity information of the first processing unit may be any value in 0 to 1024. A larger value indicating the computing capacity information of the first processing unit indicates a larger computing capacity that may be provided by the first processing unit. Alternatively, a larger value indicating the computing capacity information of the first processing unit indicates a smaller computing capacity that may be provided by the first processing unit. This is not limited in this embodiment of this application.

In some embodiments, a value indicating the computing capacity information of the first processing unit may indicate a type of the first processing unit. For example, when the second preset value range is from 0 to 1024, if the computing capacity information of the first processing unit is 0, it may indicate that the first processing unit is a little core. If the computing capacity information of the first processing unit is 512, it may indicate that the first processing unit is a common core. If the computing capacity information of the first processing unit is 1024, it may indicate that the first processing unit is a big core.

It should be understood that a larger second preset value range may indicate more accurate computing capacity information of the first processing unit. A smaller second preset value range indicates less accurate computing capacity information of the first processing unit. It should be further understood that the first preset value range may be the same as or different from the second preset value range. This is not limited in this embodiment of this application.

Optionally, the computing device may determine, based on the value indicating the computing capacity information of the first task and the value indicating the computing capacity information of the first processing unit, whether the computing capacity information of the first task matches the computing capacity information of the first processing unit. The following uses an example in which the first task includes the first thread for description.

For example, when the first preset value range is the same as the second preset value range, if the value indicating the computing capacity information of the first thread is less than the value indicating the computing capacity information of the first processing unit, it indicates that the computing capacity information of the first thread matches the computing capacity information of the first processing unit. If the value indicating the computing capacity information of the first thread is greater than the value indicating the computing capacity information of the first processing unit, it indicates that the computing capacity information of the first thread does not match the computing capacity information of the first processing unit.

For example, when the first preset value range is different from the second preset value range, a smaller preset value range may be proportionally enlarged, so that the first preset value range is the same as the second preset value range. In addition, computing capacity information indicated by a value in the smaller preset use value range may be proportionally enlarged, to determine whether the computing capacity information of the first thread matches the computing capacity information of the first processing unit by comparing the value indicating the computing capacity information of the first thread with the value indicating the computing capacity information of the first processing unit.

For example, when the first preset value range and the second preset value range are both from 0 to 1024, if the computing capacity information of the first thread is 1024, and the computing capacity information of the first processing unit is 512, the computing capacity information of the first thread does not match the computing capacity information of the first processing unit. That is, if the computing capacity information of the first thread does not match the computing capacity information of the first processing unit, the first processing unit may not provide a sufficient computing capacity to run the first thread, or it may be said that when the first processing unit runs the first thread, a speed is lower, or an error is likely to occur.

For example, when the first preset value range is the same as the second preset value range, if the value indicating the computing capacity information of the first thread and the value indicating the computing capacity information of the first processing unit fall within a same range of the first preset value range, it indicates that the computing capacity information of the first thread matches the computing capacity information of the first processing unit. If the value indicating the computing capacity information of the first thread and the value indicating the computing capacity information of the first processing unit fall within different ranges of the first preset value range, it indicates that the computing capacity information of the first thread does not match the computing capacity information of the first processing unit.

For example, when the first preset value range and the second preset value range are both from 0 to 1024, if the computing capacity information of the first thread is 512, and the computing capacity information of the first processing unit is 1024, the computing capacity information of the first thread falls within a range from 0 to 512 of the first preset range, and the computing capacity information of the first processing unit falls within a range from 513 to 1024 of the first preset value range. In other words, the computing capacity information of the first thread does not match the computing capacity information of the first processing unit, that is, the first thread may not run on the first processing unit.

If the computing capacity information of the first task matches the computing capacity information of the first processing unit, the computing device may directly run the first task on the first processing unit in the second running environment.

If the computing capacity information of the first task does not match the computing capacity information of the first processing unit, it indicates that the first processing unit may not provide a sufficient computing capacity for the first task, that is, task scheduling in the second running environment is inappropriate. Therefore, the computing device may switch from the second running environment to the first running environment based on the first interface. In addition, the computing device may receive the first information through the first interface in the first running environment. The first information includes the computing capacity information of the first task. To be specific, the computing device may transfer the computing capacity information of the first task in the second running environment to the first running environment through the first interface, to reschedule the first processing unit in the first running environment, further meeting a computing capacity requirement of the first task. In other words, the computing device may implement a transparent transmission channel of the computing capacity information through the first interface.

In some embodiments, the first interface may include a hypercall (hypercall) interface. The hypercall interface may include the computing capacity information of the first task, that is, the computing capacity information of the first task may be used as a parameter of the hypercall interface. Alternatively, the first interface may be another type of interface. This is not limited in this embodiment of this application.

It should be understood that when determining that the computing capacity requirement of the thread in the second running environment may not be met, the computing device may transfer computing capacity information of the thread to the first running environment through the first interface, that is, transparently transmit the computing capacity information of the thread. Therefore, this may avoid a performance loss caused by frequent switching between the second running environment and the first running environment.

S320: When the computing capacity information of the first task does not match the computing capacity information of the first processing unit, determine, in the first running environment, a second processing unit based on the computing capacity information of the first task.

When determining that the computing capacity information of the first task does not match the computing capacity information of the first processing unit, the computing device may reschedule the first processing unit in the first running environment, that is, determine the second processing unit based on the computing capacity information of the first task. The computing capacity information of the first processing unit is determined based on computing capacity information of a third processing unit, and the third processing unit is configured to run, in the first running environment, the first processing unit.

It should be understood that, when the first running environment is a physical running environment, the second processing unit is a physical processing unit.

Optionally, computing capacity information of a processing unit (for example, the second processing unit and the third processing unit) in the first running environment may be determined based on an ACPI table or DTS configuration information provided by a basic input/output system (basic input/output system, BIOS) when the computing device is started.

In some embodiments, the computing device may store, in the second storage space in the first running environment, the computing capacity information of the processing unit in the first running environment. For example, a big and little core computing capacity identification data structure may be added to a CPU scheduling queue structure of a first kernel in the first running environment, to store the computing capacity information of the processing unit in the first running environment.

In some embodiments, the computing device may further store, in the second storage space, computing capacity information of the processing unit (for example, the first processing unit) in the second running environment. The computing device may further store, in the second storage space, computing capacity information of a thread (for example, the first thread) that is to be run on the processing unit in the second running environment.

In some embodiments, in the first running environment, the computing device may store, in the shared memory, the computing capacity information of the processing unit in the second running environment. The shared memory may be accessed by the computing device that runs in the second running environment or the first running environment, that is, the computing device may access the shared memory regardless of whether the computing device runs in the second running environment or the first running environment.

In some embodiments, the shared memory may be an MSR or a system register, or may be another type of shared storage device, for example, may be a RAM, a DRAM, or an SRAM. This is not limited in this embodiment of this application.

In some embodiments, the computing capacity information of the processing unit in the first running environment may be indicated by a value in a third preset value range. The third preset value range may be, for example, 0 and 1, from 0 to 256, or from 0 to 1024. This is not limited in this embodiment of this application. When the third preset value range is from 0 to 1024, the computing capacity information of the processing unit in the first running environment may be any value in 0 to 1024. A larger value indicating the computing capacity information of the processing unit in the first running environment indicates a larger computing capacity that may be provided by the processing unit. Alternatively, a smaller value indicating the computing capacity information of the processing unit in the first running environment indicates a smaller computing capacity that may be provided by the processing unit. This is not limited in this embodiment of this application.

In some embodiments, a value indicating the computing capacity information of the processing unit in the first running environment may indicate a type of the processing unit. For example, when the third preset value range is from 0 to 1024, if the computing capacity information of the third processing unit is 0, it may indicate that the third processing unit is a little core. If the computing capacity information of the third processing unit is 512, it may indicate that the third processing unit is a common core. If the computing capacity information of the third processing unit is 1024, it may indicate that the third processing unit is a big core.

Optionally, the computing device may directly determine, in the first running environment based on the first interface, that the first processing unit in the second running environment may not meet the computing capacity requirement of the first thread, to determine the second processing unit in the first running environment. Alternatively, the computing device may determine, in the first running environment, whether the computing capacity information of the first thread matches the computing capacity information of the first processing unit, to determine the second processing unit based on the computing capacity information of the first thread when the computing capacity information does not match the computing capacity information of the first processing unit. This is not limited in this embodiment of this application.

In some embodiments, if the computing capacity information of the first thread matches the computing capacity information of the first processing unit, the computing device may continue to run the first processing unit on the third processing unit. In addition, the computing device may continue to run the first thread on the first processing unit.

It should be understood that, because the computing capacity information of the first processing unit is determined based on a processing unit that runs the first processing unit in the first running environment, when the third processing unit runs the first processing unit, if the computing capacity information of the first thread matches the computing capacity information of the first processing unit, it indicates that a current scheduling solution may meet a computing capacity requirement of the second running environment. Therefore, the first processing unit may continue to run on the third processing unit, and the first thread may run on the first processing unit.

In some embodiments, if the computing capacity information of the first thread does not match the computing capacity information of the first processing unit, the computing device may determine the second processing unit based on the computing capacity information of the first thread. The second processing unit is different from the third processing unit.

When the second processing unit is different from the third processing unit, the computing device may further update the computing capacity information of the first processing unit based on computing capacity information of the second processing unit. In other words, the updated computing capacity information of the first processing unit is determined based on the computing capacity information of the second processing unit.

For example, assuming that the computing capacity information of the second processing unit is 1024, the updated computing capacity information of the first processing unit may be 1024.

In some embodiments, the computing device may update the computing capacity information of the first processing unit in the shared memory. Alternatively, the computing device may store updated computing capacity information of the first processing unit in the shared memory.

Optionally, the computing device may determine the second processing unit based on the value indicating the computing capacity information of the first task and the value indicating the computing capacity information of the processing unit in the first running environment. The following uses an example in which the first task includes the first thread for description.

In some embodiments, when the first preset value range is the same as the third preset value range, if the value indicating the computing capacity information of the first thread is less than a value indicating computing capacity information of a fifth processing unit, it indicates that the computing capacity information of the first thread matches the computing capacity information of the fifth processing unit, that is, it may be determined that the fifth processing unit is the second processing unit. If the value indicating the computing capacity information of the first thread is greater than the value indicating the computing capacity information of the fifth processing unit, it indicates that the computing capacity information of the first thread does not match the computing capacity information of the fifth processing unit, that is, the fifth processing unit may not be the second processing unit. The fifth processing unit is any processing unit other than the third processing unit in the first running environment.

In some embodiments, when the first preset value range is different from the third preset value range, a smaller preset value range may be proportionally enlarged, so that the first preset value range is the same as the second preset value range. In addition, computing capacity information indicated by a value in the smaller preset use value range may be proportionally enlarged, to determine the second processing unit by comparing the computing capacity information of the first thread with the value indicating the computing capacity information of the processing unit in the first running environment.

For example, when the first preset value range and the third preset value range are both from 0 to 1024, if the computing capacity information of the first thread is 1024, and the computing capacity information of the fifth processing unit is 512, the computing capacity information of the first thread does not match the computing capacity information of the fifth processing unit, that is, the fifth processing unit may not be the second processing unit. If the computing capacity information of the first thread is 1024, and the computing capacity information of the fifth processing unit is 1024, the computing capacity information of the first thread matches the computing capacity information of the fifth processing unit, that is, the fifth processing unit may be the second processing unit. Alternatively, if the computing capacity information of the first thread is 512, and the computing capacity information of the fifth processing unit is 1024, the computing capacity information of the first thread matches the computing capacity information of the fifth processing unit, that is, the fifth processing unit may be the second processing unit.

In some embodiments, when the first preset value range is the same as the third preset value range, if the value indicating the computing capacity information of the first thread and the value indicating the computing capacity information of the fifth processing unit fall within a same range of the first preset value range, it indicates that the computing capacity information of the first thread matches the computing capacity information of the fifth processing unit, that is, it may be determined that the fifth processing unit is the second processing unit. If the value indicating the computing capacity information of the first thread and the value indicating the computing capacity information of the fifth processing unit fall within different ranges of the first preset value range, it indicates that the computing capacity information of the first thread does not match the computing capacity information of the fifth processing unit, that is, the fifth processing unit may not be the second processing unit.

For example, when the first preset value range and the third preset value range are both from 0 to 1024, if the computing capacity information of the first thread is 512, and the computing capacity information of the fifth processing unit is 1024, the computing capacity information of the first thread falls within a range from 0 to 512 of the first preset range, and the computing capacity information of the fifth processing unit falls within a range from 513 to 1024 of the first preset value range. In other words, the computing capacity information of the first thread does not match the computing capacity information of the fifth processing unit, that is, the fifth processing unit may not be the second processing unit. If the computing capacity information of the first thread is 512, and the computing capacity information of the fifth processing unit is 512, the computing capacity information of the first thread and the computing capacity information of the fifth processing unit both fall within the range from 0 to 512 of the first preset range. In other words, if the computing capacity information of the first thread matches the computing capacity information of the fifth processing unit, that is, it may be determined that the fifth processing unit is the second processing unit.

S330: Run, in the first running environment, the first processing unit by using the second processing unit.

After the computing device determines the second processing unit, the computing device may migrate the first processing unit from the third processing unit to the second processing unit for running, and run the first thread on the first processing unit.

It should be understood that, because the computing capacity information of the second processing unit matches the computing capacity information of the first thread, after the first processing unit is migrated to the second processing unit for running, a computing capacity of the first processing unit is improved. The computing capacity information of the first processing unit may be determined based on the computing capacity information of the second processing unit. In other words, after the first processing unit is migrated to the second processing unit for running, the first processing unit may meet the computing capacity requirement of the first thread, and therefore, the first thread may continue to run on the first processing unit.

For example, it is assumed that the first preset value range, the second preset value range, and the third preset value range are all from 0 to 1024, the computing capacity information of the first thread is 1024, and the computing capacity information of the third processing unit is 512. Because the computing capacity information of the first processing unit before update is determined based on the computing capacity information of the third processing unit, the computing capacity information of the first processing unit before update is 512. The computing device may directly determine, in the first running environment based on the first interface, that the computing capacity information of the first thread does not match the computing capacity information of the first processing unit. Assuming that the computing capacity information of the second processing unit is 1024, the computing device may determine, from the stored computing capacity information of the processing unit in the first running environment, that the computing capacity information of the second processing unit matches the computing capacity information of the first thread, to determine the second processing unit. After the first processing unit is migrated to the second processing unit for running, the computing capacity information of the first processing unit is determined based on the computing capacity information of the second processing unit, that is, the computing capacity information of the first processing unit is 1024. In other words, the updated computing capacity information of the first processing unit may meet the computing capacity requirement of the first thread, that is, the first thread may continue to run on the first processing unit.

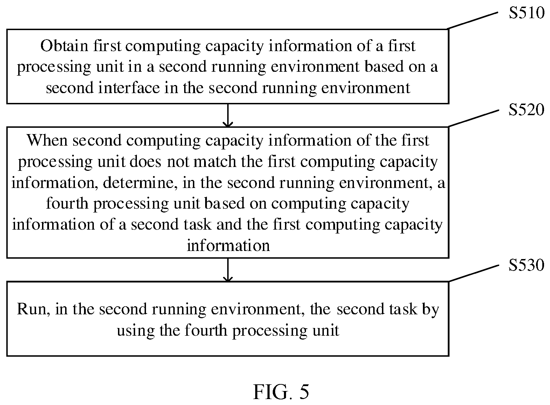

Optionally, after step S330, the computing device may further obtain first computing capacity information of the first processing unit in the second running environment based on the second interface in the second running environment. The first processing unit migrates from a third processing unit in a first running environment to a second processing unit in the first running environment for running, and the first computing capacity information is determined based on computing capacity information of the second processing unit. When second computing capacity information of the first processing unit does not match the first computing capacity information, the computing device may further determine, in the second running environment, a fourth processing unit based on computing capacity information of a second task and the first computing capacity information. The second computing capacity information is determined based on computing capacity information of the third processing unit. The second task is a task to be run on the first processing unit, and the computing capacity information of the second task indicates a minimum computing capacity of a processing unit that runs the second task. The computing device may further run, in the second running environment, the second task by using the fourth processing unit. For a specific implementation, refer to description in FIG. 5.

The computing device may transfer computing capacity information of a thread in the second running environment to the first running environment in real time through the first interface, to help the computing device schedule a processing unit in the first running environment, and further meet a computing capacity requirement of the second running environment. According to the method in this embodiment of this application, the computing device may synchronize, in the first running environment and the second running environment, the computing capacity requirement of the second running environment, to perform coordinated scheduling on the processing units in the first running environment and the second running environment quickly and accurately, and further improve computing performance of the computing device.

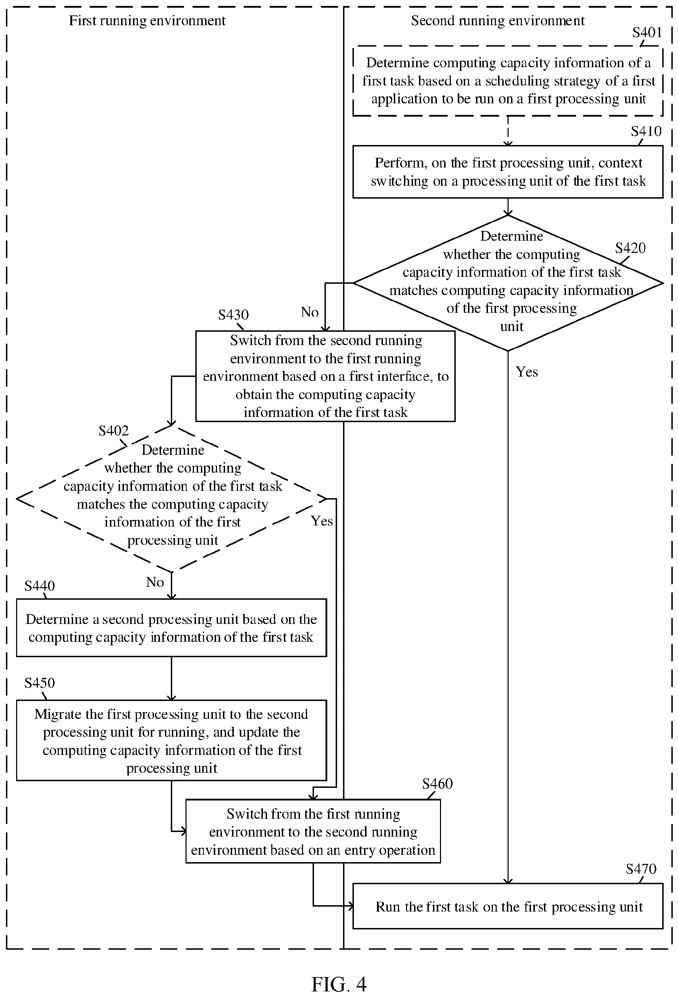

FIG. 4 is a schematic flowchart of a coordinated scheduling method according to an embodiment of this application. The method in FIG. 4 includes the following steps.

S410: Perform, on a first processing unit, context switching on a processing unit of a first task.

In a second running environment, before running the first task on the first processing unit, a computing device needs to perform context switching on the processing unit of the first task. The first processing unit is a processing unit in the second running environment. Context switching on the processing unit of the first task means storing, in first storage space, data of a previous task that is already stored in a register of the processing unit, and switching data of the first task to the register of the processing unit. The following uses an example in which the first task includes the first thread for description.

It should be understood that when creating the second running environment, the computing device allocates one or more registers to the first processing unit in the second running environment, to store data required by the first processing unit in a thread running process or a computation result. Before the first processing unit runs the first thread, the computing device needs to store data or a computation result of a previous thread in the first storage space in the second running environment. The previous thread is a thread that runs on the first processing unit before the first thread. The first storage space is storage space allocated to the second running environment when the computing device creates the second running environment. The first storage space is some or all of second storage space in the first running environment. After the first processing unit runs the previous thread, information such as data or a computation result required for running the previous thread is still stored in the one or more registers of the first processing unit. After the computing device stores the data or the computation result of the previous thread in the first storage space, the computing device further needs to switch the information such as the data or the computation result required for running the first thread to the one or more registers of the first processing unit, and then the first processing unit may run the first thread.

Optionally, before step S410, the computing device further needs to perform step S401.

S401: Determine computing capacity information of the first task based on a scheduling strategy of a first application to be run on the first processing unit. A specific implementation of step S401 is similar to that of step S301, and details are described herein again.

After performing, on the first processing unit, context switching on the processing unit of the first task, the computing device does not directly run the first task on the first processing unit, and further needs to perform step S420.

S420: Determine whether the computing capacity information of the first task matches computing capacity information of the first processing unit. A specific implementation of step S420 is similar to that of step S302, and details are described herein again.

When determining that the computing capacity information of the first task does not match the computing capacity information of the first processing unit, the computing device may perform step S430.

When determining that the computing capacity information of the first task matches the computing capacity information of the first processing unit, the computing device may perform step S470.

S430: Switch from the second running environment to the first running environment based on a first interface, to obtain the computing capacity information of the first task.

The computing device may call, in the second running environment, the first interface, to switch from the second running environment to the first running environment. The computing device may further include first information in the first interface. The first information includes the computing capacity information of the first task. After switching to the first running environment, the computing device may further receive the first information through the first interface, to obtain the computing capacity information of the first task. For a specific implementation, refer to the description of step S310.

S440: Determine a second processing unit based on the computing capacity information of the first task. Step S440 is similar to step S320. Details are not described herein again.

Optionally, before performing step S440, the computing device may further perform step S402.

S402: Determine whether the computing capacity information of the first task matches computing capacity information of the first processing unit.

The computing device may determine, in the first running environment, whether the computing capacity information of the first task matches the computing capacity information of the first processing unit. A specific implementation in which the computing device determines, in the first running environment, whether the computing capacity information of the first task matches the computing capacity information of the first processing unit is similar to step S302. Details are not described herein again.

It should be understood that, although the computing device determines, in the second running environment, that the computing capacity information of the first task does not match the computing capacity information of the first processing unit, the computing device may not accurately determine, in the first running environment through the first interface, that the computing capacity information of the first task in the current second running environment does not match the computing capacity information of the first processing unit. Therefore, the computing device still needs to redetermine, in the first running environment, whether the computing capacity information of the first task matches the computing capacity information of the first processing unit.

When determining that the computing capacity information of the first task does not match the computing capacity information of the first processing unit, the computing device may perform step S440.

When determining that the computing capacity information of the first task matches the computing capacity information of the first processing unit, the computing device may perform step S460.

S450: Migrate the first processing unit to the second processing unit for running, and update the computing capacity information of the first processing unit. A specific implementation of step S450 is similar to that of step S330, and details are described herein again.

S460: Switch from the first running environment to the second running environment based on an entry operation.

After performing coordinated scheduling on the first processing unit and updating the computing capacity information of the first processing unit, the computing device may perform the entry operation to switch from the first running environment to the second running environment. In this case, the first processing unit actually runs on the second processing unit in the first running environment, and the first processing unit may meet a computing capacity requirement of the first task.

Optionally, after switching to the second running environment, the computing device may update, in the first storage space in the second running environment, the computing capacity information of the first processing unit based on updated computing capacity information of the first processing unit. In other words, the computing device may update, in the second running environment, the updated computing capacity information of the first processing unit to the first storage space.

S470: Run the first task on the first processing unit.

After rescheduling the first processing unit and switching from the first running environment to the second running environment, the computing device may run the first task on the first processing unit. Alternatively, when the computing device determines that the computing capacity information of the first task matches the computing capacity information of the first processing unit, the computing device may directly run, in the second running environment, the first task on the first processing unit.

It should be understood that, because the computing device switches the required data of the first task to the register of the first processing unit in step S410, the first processing unit may directly start to run the first task. In addition, because the computing capacity of the first processing unit is improved, the first processing unit may provide a sufficient computing capacity for the first task, to implement maximum computing energy efficiency of the computing device, and effectively improve an overall throughput and an instantaneous response speed of the computing device.

The computing device may receive, in the first running environment, a computing capacity requirement of the second running environment in real time, to perform coordinated scheduling on the processing units in the first running environment and the second running environment quickly and accurately, effectively improve a computing capacity of a processing unit in the second running environment, and further improve computing performance of the computing device.

FIG. 5 is a schematic flowchart of a coordinated scheduling method according to an embodiment of this application. The method in FIG. 5 includes the following steps.

S510: Obtain first computing capacity information of a first processing unit in a second running environment based on a second interface in the second running environment.

In the second running environment, the computing device may obtain the first computing capacity information of the first processing unit based on the second interface. The first processing unit migrates from a third processing unit in a first running environment to a second processing unit in the first running environment for running. The first computing capacity information of the first processing unit is determined based on the computing capacity information of the second processing unit.

It should be understood that, when the first running environment is a physical running environment, the second processing unit and the third processing unit are physical processing units. The second running environment is a virtual running environment, and the first processing unit is a virtual processing unit. In addition, the first processing unit actually runs on the third processing unit or the second processing unit in the first running environment.

In some embodiments, in the first running environment, the computing device may reschedule or allocate a resource of a processing unit in the second running environment or the first running environment, and may adjust a processing unit that originally handles a compute-intensive task to a processing unit that handles a lightweight task, that is, adjust a big core to a little core. Alternatively, a processing unit that originally handles a lightweight task may be adjusted to a processing unit that handles a compute-intensive task, that is, a little core is adjusted to a big core. However, after the first processing unit in the second running environment is rescheduled, some tasks in the first processing unit may no longer be suitable for running on the first processing unit. Therefore, the computing device may transfer, to the second running environment through the second interface, information that the processing unit has been rescheduled, to allocate, in the second running environment, a more appropriate processing unit to some tasks. In other words, the computing device may implement a message notification channel through the second interface.

Optionally, the second interface may include a virtual interrupt or a virtual ACPI event, or the second interface may be another type of interface, for example, an interface for accessing a special storage device or an offset address. Alternatively, the second interface may include another event. This is not limited in this embodiment of this application. The second interface or an event included in the second interface may indicate that the computing capacity information of the processing unit in the second running environment is updated. In other words, the virtual interrupt or the virtual ACPI event may indicate that the computing capacity information of the first processing unit is updated.

Optionally, the computing device may obtain the first computing capacity information of the first processing unit from a shared memory based on the second interface. In other words, the shared memory may store the first computing capacity information of the first processing unit. The shared memory may be accessed by the computing device that runs in the second running environment or the first running environment, that is, the computing device may access the shared memory regardless of whether the computing device runs in the second running environment or the first running environment.

In some embodiments, the shared memory may be an MSR or a system register, or may be another type of shared storage device, for example, may be a RAM, a DRAM, or an SRAM. This is not limited in this embodiment of this application.

Optionally, the first computing capacity information of the first processing unit may be stored in first storage space in the second running environment. In other words, the first storage space in the second running environment may store the computing capacity information of the processing unit in the second running environment. The computing device may update, in the second running environment, updated first computing capacity information of the first processing unit to the first storage space.

In some embodiments, the first computing capacity information of the first processing unit may be stored in a processing unit scheduling queue structure of the second kernel in the second running environment. For example, a big and little core computing capacity identification data structure may be added to a CPU scheduling queue structure of the second core, to store the first computing capacity information of the first processing unit.

Optionally, the computing capacity information of the first processing unit may be indicated by a value in a second preset value range. The second preset value range may be, for example, 0 and 1, from 0 to 256, or from 0 to 1024. This is not limited in this embodiment of this application. When the second preset value range is from 0 to 1024, the computing capacity information of the first processing unit may be any value in 0 to 1024. A larger value indicating the computing capacity information of the first processing unit indicates a larger computing capacity that may be provided by the first processing unit. Alternatively, a larger value indicating the computing capacity information of the first processing unit indicates a smaller computing capacity that may be provided by the first processing unit. This is not limited in this embodiment of this application.

In some embodiments, a value indicating the computing capacity information of the first processing unit may indicate a type of the first processing unit. For example, when the second preset value range is from 0 to 1024, if the computing capacity information of the first processing unit is 0, it may indicate that the first processing unit is a little core. If the computing capacity information of the first processing unit is 512, it may indicate that the first processing unit is a common core. If the computing capacity information of the first processing unit is 1024, it may indicate that the first processing unit is a big core.

It should be understood that a larger second preset value range may indicate more accurate computing capacity information of the first processing unit. A smaller second preset value range indicates less accurate computing capacity information of the first processing unit.

Optionally, before step S510, the computing device may further perform step S501.

S501: Determine, in the first running environment, whether the first computing capacity information of the first processing unit matches second computing capacity information of the first processing unit.

After the computing device readjusts the processing unit in the second running environment or the first running environment, the computing device needs to redetermine whether a task in the second running environment may run on the original processing unit, to ensure that a computing capacity requirement of the second running environment may be met. Therefore, the computing device needs to determine, in the first running environment, whether computing capacity information of the first processing unit before migration matches computing capacity information of the first processing unit after migration, that is, determine, in the first running environment, whether the first computing capacity information of the first processing unit matches the second computing capacity information. If the first computing capacity information does not match the second computing capacity information, the computing device may call the second interface to transfer, to the second running environment, information that the computing capacity information of the first processing unit is changed.

In some embodiments, the computing device may obtain second computing capacity information of the first processing unit from the second storage space, that is, the second computing capacity information of the first processing unit may be stored in the second storage space in the first running environment.

For example, a big and little core computing capacity identification data structure may be added to a CPU scheduling queue structure of a second kernel in the first running environment, to store the second computing capacity information of the processing unit in the first running environment.

Optionally, computing capacity information of the processing units (for example, the third processing unit and the second processing unit) in the first running environment may be determined based on an ACPI table or DTS configuration information that is provided by a BIOS when the computing device is started.

Optionally, the computing capacity information of the processing unit in the first running environment may be indicated by a value in a third preset value range. The third preset value range may be, for example, 0 and 1, from 0 to 256, or from 0 to 1024. This is not limited in this embodiment of this application. When the third preset value range is from 0 to 1024, the computing capacity information of the processing unit in the first running environment may be any value in 0 to 1024. A larger value indicating the computing capacity information of the processing unit in the first running environment indicates a larger computing capacity that may be provided by the processing unit. Alternatively, a larger value indicating the computing capacity information of the processing unit in the first running environment indicates a smaller computing capacity that may be provided by the processing unit. This is not limited in this embodiment of this application.

In some embodiments, a value indicating the computing capacity information of the processing unit in the first running environment may indicate a type of the processing unit. For example, when the third preset value range is from 0 to 1024, if the computing capacity information of the third processing unit is 0, it may indicate that the third processing unit is a little core. If the computing capacity information of the third processing unit is 512, it may indicate that the third processing unit is a common core. If the computing capacity information of the third processing unit is 1024, it may indicate that the third processing unit is a big core.

It should be understood that the second preset value range may be the same as or different from the third preset value range. This is not limited in this embodiment of this application.

Optionally, the computing device may determine the second computing capacity information of the first processing unit based on the computing capacity information of the third processing unit. The computing device may further determine the first computing capacity information of the first processing unit based on the computing capacity information of the second processing unit.

For example, assuming that the second preset value range and the third preset value range are both from 0 to 1024, and the computing capacity information of the third processing unit is 512, the second computing capacity information of the first processing unit may be 512. Assuming that the computing capacity information of the second processing unit is 1024, the first computing capacity information of the first processing unit may be 1024.

Optionally, the computing device may determine, based on values of the first computing capacity information and the second computing capacity information of the first processing unit, that the first computing capacity information does not match the second computing capacity information. If a type of the processing unit indicated by a value of the first computing capacity information is the same as a type of the processing unit indicated by a value of the second computing capacity information, it indicates that the first computing capacity information matches the second computing capacity information. If the type of the processing unit indicated by the value of the first computing capacity information is different from the type of the processing unit indicated by the value of the second computing capacity information, it indicates that the first computing capacity information does not match the second computing capacity information.

For example, if the first computing capacity information is 512, and the second computing capacity information is 1024, the type of the processing unit indicated by the value of the first computing capacity information is a little core, and the type of the processing unit indicated by the value of the second computing capacity information is a big core. In other words, the first computing capacity information does not match the second computing capacity information.

In some embodiments, if the first computing capacity information does not match the second computing capacity information, it indicates that a big core in the second running environment is adjusted to a little core, that is, the first processing unit currently runs on the little core in the first running environment. Alternatively, if the first computing capacity information does not match the second computing capacity information, it indicates that a little core in the second running environment is adjusted to a big core, that is, the first processing unit currently runs on the big core in the first running environment. In other words, some tasks in the second running environment may not run on a processing unit with an appropriate computing capacity. In this case, computing performance of the computing device is relatively low. Therefore, the computing device may call the second interface to switch from the first running environment to the second running environment, to reschedule some tasks in the second running environment, so that each task may run on an appropriate processing unit.

S520: When the first computing capacity information of the first processing unit does not match the second computing capacity information, determine, in the second running environment, a fourth processing unit based on computing capacity information of a second task and the first computing capacity information.

When the first computing capacity information of the first processing unit does not match the second computing capacity information, the computing device may determine, in the second running environment, the fourth processing unit based on the computing capacity information of the second task and the first computing capacity information of the first processing unit. The second task is a task to be run on the first processing unit. The fourth processing unit is a processing unit in the second running environment, and the fourth processing unit is configured to run the second task.

It should be understood that, when the second running environment is a virtual running environment, the fourth processing unit is a virtual processing unit.

Optionally, the computing capacity information of the second task may be determined based on a scheduling strategy of a second application to which the second task belongs. In other words, the computing device may determine, in the second running environment, the computing capacity information of the second task based on the scheduling strategy of the second application to be run on the first processing unit. The second task belongs to the second application.

It should be understood that the second task may include a second process or a second thread. The second process is a process to be run on the first processing unit in the second running environment. The second t thread is a thread to be run on the first processing unit in the second running environment. The following uses an example in which the second task includes the second thread for description.

It should be understood that a method used when the second task includes the second process is similar to a method used when the second task includes the second thread. For brevity of description, details are not described again.

In some embodiments, the second running environment may include one or more applications, and each application may include one or more threads. The second application is any one of the one or more applications, and the second thread is any one of one or more threads of the second application. A scheduling strategy set by the computing device for each application may be the same or different. The scheduling strategy may include a priority of the application, a computing capacity or a computing resource required for running the application, and the like. The computing device may determine, based on a scheduling strategy of each application, computing capacity information of each thread of each application, that is, determine a computing capacity required for running each thread, or determine a computing capacity requirement of each thread. The computing capacity information of each thread may be a computing speed or a computing capacity that a processing unit needs to meet when executing the thread, that is, the computing capacity information of each thread may indicate a minimum computing capacity of the processing unit that runs the thread.

Optionally, the computing capacity information of the second thread may be stored in the first storage space in the second running environment. The first storage space is storage space allocated to the second running environment when the computing device creates the second running environment. The first storage space is some or all of second storage space in the first running environment.

In some embodiments, the computing capacity information of the second thread may be stored in a task structure of a second kernel in the second running environment. For example, a feature identification structure may be added to the task structure of the second kernel, to store the computing capacity information of the second thread.

In some embodiments, the computing capacity information of the second thread may be indicated by a value in a first preset value range. The first preset value range may be, for example, 0 and 1, from 0 to 256, or from 0 to 1024. This is not limited in this embodiment of this application. When the first preset value range is from 0 to 1024, the computing capacity information of the second thread may be any value in 0 to 1024. A larger value indicating the computing capacity information of the second thread indicates a larger computing capacity requirement of the second thread. Alternatively, a larger value indicating the computing capacity information of the second thread indicates a smaller computing capacity requirement of the second thread. This is not limited in this embodiment of this application.

It should be understood that a larger first preset value range indicates more accurate computing capacity information of the second thread. A smaller first preset value range indicates less accurate computing capacity information of the second thread.

Optionally, in the second running environment, the computing device may obtain the computing capacity information of the processing unit in the second running environment from the shared memory based on the second interface, for example, the first computing capacity information of the first processing unit and computing capacity information of the fourth processing unit. In other words, the shared memory may store the computing capacity information of the processing unit in the second running environment. The shared memory may be accessed by the computing device that runs in the second running environment or the first running environment, that is, the computing device may access the shared memory regardless of whether the computing device runs in the second running environment or the first running environment.

In some embodiments, the shared memory may be an MSR or a system register, or may be another type of shared storage device, for example, may be a RAM, a DRAM, or an SRAM. This is not limited in this embodiment of this application.

Optionally, the computing capacity information of the processing unit in the second running environment may be further stored in the first storage space in the second running environment.

In some embodiments, the computing capacity information of the processing unit in the second running environment may be stored in a processing unit scheduling queue structure of the second kernel in the second running environment. For example, a big and little core computing capacity identification data structure may be added to a CPU scheduling queue structure of the second core, to store the computing capacity information of the processing unit in the second running environment.

Optionally, the computing device may directly determine, in the second running environment based on the second interface, that updated first processing unit is not suitable for running the second thread, to determine the fourth processing unit in the second running environment. Alternatively, the computing device may determine, in the second running environment, whether the computing capacity information of the second thread matches the first computing capacity information of the first processing unit, to determine the fourth processing unit based on the computing capacity information of the second thread when the computing capacity information does not match the first computing capacity information of the first processing unit. This is not limited in this embodiment of this application.

In some embodiments, if the computing capacity information of the second thread matches the first computing capacity information of the first processing unit, the computing device may determine that the fourth processing unit is the first processing unit, and continue to run the second thread on the first processing unit. In other words, the fourth processing unit is the same as the first processing unit.

It should be understood that, if the computing capacity information of the second thread matches the first computing capacity information of the first processing unit, it indicates that even if the first processing unit is rescheduled, a computing capacity that may be provided by the first processing unit for the second thread is not affected. Therefore, the second thread may continue to run on the first processing unit.

In some embodiments, if the computing capacity information of the second thread does not match the first computing capacity information of the first processing unit, the computing device may determine the fourth processing unit based on the computing capacity information of the second thread. The fourth processing unit is different from the first processing unit. In other words, the fourth processing unit is a processing unit other than the first processing unit in the second running environment.

Optionally, the computing device may determine the fourth processing unit based on a value indicating the computing capacity information of the second task and a value indicating the computing capacity information of the processing unit in the second running environment. The following uses an example in which the second task includes the second thread for description.

For example, it is assumed that the first preset value range and the second preset value range are both from 0 to 1024, the computing capacity information of the second thread is 1024, the first computing capacity information of the first processing unit is 512, and the computing capacity information of the fourth processing unit is 1024. Because the computing capacity information of the second thread does not match the first computing capacity information of the first processing unit, the computing device may determine, from the stored computing capacity information of the processing unit in the second running environment, that the computing capacity information of the fourth processing unit matches the computing capacity information of the first thread, to determine the fourth processing unit.

Optionally, a specific implementation in which the computing device determines whether the computing capacity information of the second thread matches the computing capacity information of the first processing unit is similar to step S302, and details are not described herein again.

S530: Run, in the second running environment, the second task by using the fourth processing unit.

After the computing device determines the fourth processing unit, the computing device may migrate the second task from the first processing unit to the fourth processing unit for running.

It should be understood that when the first processing unit is migrated from the third processing unit to the second processing unit, the computing capacity of the first processing unit changes, and therefore the first processing unit is no longer suitable for running the second task. The computing capacity information of the fourth processing unit matches the computing capacity information of the second task. Therefore, the fourth processing unit may provide an appropriate computing capacity for the second task.

Optionally, after step S530, the computing device may further determine, in the second running environment, that computing capacity information of the first thread to be run on the first processing unit does not match the computing capacity information of the first processing unit. The computing capacity information of the first thread indicates a minimum computing capacity of a processing unit that runs the first thread. The computing capacity information of the first processing unit is determined based on computing capacity information of a third processing unit, and the third processing unit is configured to run, in the first running environment, the first processing unit. The computing device may further switch from the second running environment to the first running environment based on the first interface. The first interface includes the computing capacity information of the first thread. The computing device may further determine, in the first running environment, the second processing unit based on the computing capacity information of the first thread. The second processing unit is configured to run the first processing unit, and the computing capacity information of the second processing unit matches computing capacity information of the first thread. For a specific implementation, refer to description in FIG. 3.

The computing device may transfer, to the second running environment in real time through the second interface, information that the processing units in the first running environment and the second running environment has been rescheduled, to help schedule a thread in the second running environment in time. According to the method in this embodiment of this application, the computing device may synchronize, in the first running environment and the second running environment in real time, the computing capacity information of the processing unit, to perform coordinated scheduling on the processing units in the first running environment and the second running environment quickly and accurately, and further improve computing performance of the computing device.

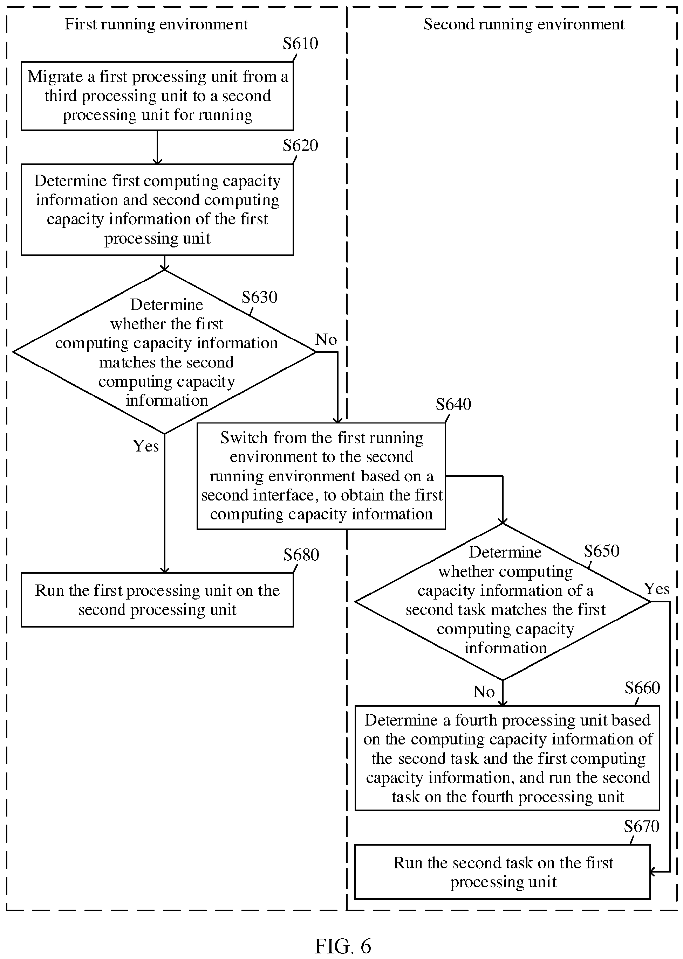

FIG. 6 is a schematic flowchart of a coordinated scheduling method according to an embodiment of this application. The method in FIG. 6 includes the following steps.

S610: Migrate a first processing unit from a third processing unit to a second processing unit for running.

A computing device may reschedule, in a first running environment, a processing unit in a second running environment based on an actual computing requirement. For example, the first processing unit in the second running environment may be migrated from the third processing unit in the first running environment to the second processing unit in the first running environment for running.

After rescheduling, in the first running environment, the first processing unit in the second running environment, the computing device needs to determine in time whether computing capacity information of the first processing unit changes, to help schedule a task in the second running environment, to meet a computing capacity requirement of the second running environment.

S620: Determine first computing capacity information and second computing capacity information of the first processing unit.

Optionally, the computing device may obtain the first computing capacity information of the first processing unit based on a shared memory. In other words, the shared memory may store the first computing capacity information of the first processing unit. The shared memory may be accessed by the computing device that runs in the second running environment or the first running environment, that is, the computing device may access the shared memory regardless of whether the computing device runs in the second running environment or the first running environment.

In some embodiments, the shared memory may be an MSR or a system register, or may be another type of shared storage device, for example, may be a RAM, a DRAM, or an SRAM. This is not limited in this embodiment of this application.

In some embodiments, the second computing capacity information of the first processing unit may be stored in second storage space in the first running environment, that is, the computing device may obtain the second computing capacity information of the first processing unit from the second storage space.

Optionally, the computing device may determine the second computing capacity information of the first processing unit based on the computing capacity information of the third processing unit. The computing device may further determine the first computing capacity information of the first processing unit based on the computing capacity information of the second processing unit.

Optionally, computing capacity information of the processing units (for example, the third processing unit and the second processing unit) in the first running environment may be determined based on an ACPI table or DTS configuration information that is provided by a BIOS when the computing device is started.

In some embodiments, the computing device may store, in the second storage space, the computing capacity information of the processing unit in the first running environment. For example, a big and little core computing capacity identification data structure may be added to a CPU scheduling queue structure of a first kernel in the first running environment, to store the computing capacity information of the processing unit in the first running environment.

In some embodiments, the first computing capacity information and the second computing capacity information of the first processing unit may be indicated by values in a second preset value range. The computing capacity information of the processing unit in the first running environment may be indicated by a value in a third preset value range. For a specific representation manner, refer to the description of step S501.

S630: Determine whether the first computing capacity information matches the second computing capacity information. A specific implementation of step S630 is similar to that of step S501, and details are described herein again.

If it is determined that the first computing capacity information does not match the second computing capacity information, step S640 may be performed.

If it is determined that the first computing capacity information matches the second computing capacity information, step S680 may be performed.

S640: Switch from the first running environment to the second running environment based on a second interface, to obtain the first computing capacity information.

The computing device may call, in the first running environment, the second interface, to switch from the first running environment to the second running environment.

Optionally, the second interface may include a virtual interrupt or a virtual ACPI event, or the second interface may be another type of interface, for example, an interface for accessing a special storage device or an offset address. Alternatively, the second interface may include another event. This is not limited in this embodiment of this application. The second interface or an event included in the second interface may indicate that the computing capacity information of the processing unit in the second running environment is updated. In other words, the virtual interrupt or the virtual ACPI event may indicate that the computing capacity information of the first processing unit is updated.

Optionally, the computing device may configure, in the first running environment, an event identifier included in the second interface, for example, configure an interrupt identifier of a virtual interrupt, or configure an event identifier of a virtual ACPI event. This is not limited in this embodiment of this application. When calling the second interface, the computing device may execute a switch instruction to switch from the first running environment to the second running environment. After switching to the second running environment, the computing device may determine, based on the event identifier included in the second interface, that the computing capacity information of the processing unit in the second running environment is updated. In other words, an event included in the second interface may indicate that the computing capacity information of the processing unit in the second running environment is updated.

A specific implementation in which the computing device obtains the first computing capacity information based on the second interface is similar to step S510, and details are not described herein again.

S650: Determine whether computing capacity information of a second task matches the first computing capacity information. For a specific determining manner, refer to the description of step S520. Details are not described herein again.

When the computing capacity information of the second task does not match the first computing capacity information, the computing device may perform step S660.

When the computing capacity information of the second task matches the first computing capacity information, the computing device may perform step S670.

S660: Determine a fourth processing unit based on the computing capacity information of the second task and the first computing capacity information.

When the computing capacity information of the second task does not match the first computing capacity information, the fourth processing unit is different from the first processing unit. A specific implementation in which the computing device determines the fourth processing unit based on the computing capacity information of the second task and the first computing capacity information is similar to step S520. Details are not described herein again.

S670: Run the second task on the first processing unit.

If the computing capacity information of the second task matches the first computing capacity information, it indicates that an updated first processing unit may provide an appropriate computing capacity for the second task. Therefore, the computing device may directly run the second task on the first processing unit, that is, the fourth processing unit is the same as the first processing unit.

S680: Run the first processing unit on the second processing unit.

If the first computing capacity information matches the second computing capacity information, it indicates that a type of the first processing unit does not change even if the first processing unit is migrated from the third processing unit to the second processing unit. That is, if the first processing unit handles a compute-intensive task before migration, the first processing unit may still handle a compute-intensive task after migration, that is, the first processing unit is a big core before and after migration. Alternatively, if the first processing unit handles a lightweight task before migration, the first processing unit still handles a lightweight task after migration, that is, the first processing unit is a little core before and after migration. Therefore, when determining that the first computing capacity information matches the second computing capacity information, the computing device may directly run the first processing unit on the second processing unit.

The computing device may receive, in the second running environment in real time, information indicating that the processing unit has been rescheduled, so that a task in the second running environment may be scheduled quickly and accurately, so that each task may run on a processing unit with an appropriate computing capacity, improving computing performance of the computing device.

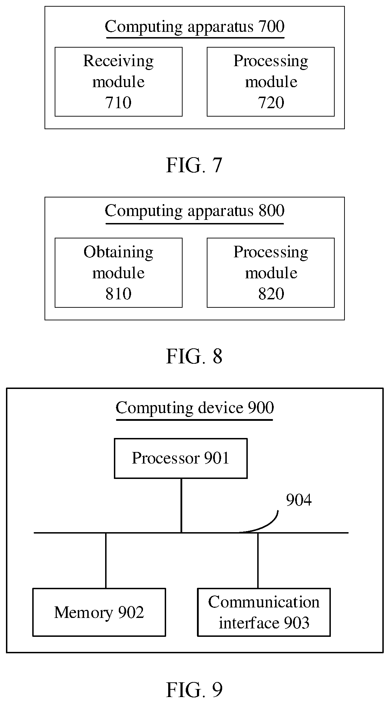

FIG. 7 is a diagram of a structure of a computing apparatus 700 according to an embodiment of this application. The computing apparatus 700 includes a receiving module 710 and a processing module 720.

The receiving module 710 is configured to receive first information through a first interface in a first running environment, and perform step S310 in the method in FIG. 3 and step S430 in the method in FIG. 4.

The processing module 720 is configured to: when computing capacity information of a first task does not match computing capacity information of a first processing unit, determine, in the first running environment, a second processing unit based on the computing capacity information of the first task. The processing module 720 is further configured to run, in the first running environment, the first processing unit by using the second processing unit. The processing unit 720 may perform steps S320 and S330 in FIG. 3, and steps S402, and S440 to S460 in FIG. 4.

In some embodiments, the computing apparatus 700 may further include a first determining module (not shown in the figure). The first determining module is configured to determine, in a second running environment, that the computing capacity information of the first task does not match the computing capacity information of the first processing unit. The first determining module is configured to perform steps S401, S410, S420, and S470 in FIG. 4.

FIG. 8 is a diagram of a structure of a computing apparatus 800 according to an embodiment of this application. The computing apparatus 800 includes an obtaining module 810 and a processing module 820.

The obtaining module 810 is configured to obtain first computing capacity information of a first processing unit in a second running environment based on a second interface in the second running environment. The processing module 810 may perform step S510 in FIG. 5 and step S640 in FIG. 6.

The processing module 820 is configured to: when the first computing capacity information of the first processing unit does not match second computing capacity information, determine, in the second running environment, a fourth processing unit based on computing capacity information of a second task and the first computing capacity information. The processing module 820 is further configured to run, in the second running environment, the second task by using the fourth processing unit. The processing module 820 performs steps S520 and S530 in the method in FIG. 5, and steps S650 to S670 in the method in FIG. 6.

In some embodiments, the computing apparatus 800 may further include a determining module (not shown in the figure). The determining module is configured to determine, in a first running environment, that the first computing capacity information does not match the second computing capacity information. The determining module performs steps S610 to S630, and S680 in the method in FIG. 6.

FIG. 9 is a block diagram of a structure of a computing device according to an embodiment of this application. The computing device 900 in FIG. 9 includes a processor 901, a memory 902, and a communication interface 903. The processor 901, the memory 902, and the communication interface 903 communicate with each other by using a bus 904.

The methods disclosed in the foregoing embodiments of the present invention may be applied to the processor 901, or implemented by the processor 901. The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like. In an implementation process, the steps in the foregoing methods may be completed by using an integrated logic circuit of hardware in the processor 901 or instructions in a form of software. It may implement or perform the methods, the steps, and logical block diagrams that are disclosed in embodiments of the present invention. The general-purpose processor may be a microprocessor, any conventional processor, or the like. Steps of the methods disclosed with reference to embodiments of the present invention may be directly executed and accomplished using a hardware decoding processor, or may be executed and accomplished by using a combination of hardware and software modules in the decoding processor. The software module may be located in the memory 902. The memory 902 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The processor 901 reads instructions in the memory 902, and completes the steps in the foregoing methods in combination with hardware of the processor 901.

The memory 902 may store instructions for performing the methods performed by the computing device in the foregoing embodiments. The processor 901 may execute the instructions stored in the memory 902 to complete the steps of the computing device in the foregoing embodiments in combination with other hardware. For a detailed working process and beneficial effects, refer to the descriptions in the foregoing embodiments.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

In addition to a data bus, the bus 904 may further include a power bus, a control bus, a status signal bus, and the like. However, for clear description, various types of buses in the figure are denoted as the bus 904.

An embodiment of this application further provides a system on chip, where the system on chip includes a logic circuit. The logic circuit is configured to: be coupled to an input/output interface, and transmit data through the input/output interface, to perform steps performed by the computing device in the foregoing embodiments.

According to the methods provided in embodiments of this application, this application further provides a computer program product. The computer program product includes computer program code, and when the computer program code is run on a computer, the computer is enabled to perform the steps in the foregoing embodiments.

According to the methods provided in embodiments of this application, this application further provides a computer-readable medium. The computer-readable medium stores program code, and when the program code is run on a computer, the computer is enabled to perform the steps in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A coordinated scheduling method, comprising:
receiving first information through a first interface in a first running environment, wherein the first information comprises computing capacity information of a first task, the first task is a task to be run on a first processing unit in a second running environment, and the computing capacity information of the first task indicates a minimum computing capacity of a processing unit that runs the first task;
when the computing capacity information of the first task does not match computing capacity information of the first processing unit, determining, in the first running environment, a second processing unit based on the computing capacity information of the first task, wherein the computing capacity information of the first processing unit is determined based on computing capacity information of a third processing unit, and the third processing unit is configured to run, in the first running environment, the first processing unit; and
running, in the first running environment, the first processing unit by using the second processing unit.

2. The method according to claim 1, wherein the first interface comprises a hypercall hypercall interface.

3. The method according to claim 1 or 2, wherein the method further comprises:
determining, in the second running environment, that the computing capacity information of the first task does not match the computing capacity information of the first processing unit; and
calling, in the second running environment, the first interface, to switch from the second running environment to the first running environment.

4. The method according to any one of claims 1 to 3, wherein the method further comprises:
updating, in the first running environment, the computing capacity information of the first processing unit based on computing capacity information of the second processing unit.

5. The method according to any one of claims 1 to 4, wherein the computing capacity information of the first processing unit is stored in a shared memory, and the shared memory is accessed by a computing device running in the first running environment or the second running environment.

6. The method according to claim 5, wherein the shared memory comprises a model-specific register MSR or a system register.

7. The method according to any one of claims 1 to 6, wherein the method further comprises:
obtaining first computing capacity information of the first processing unit based on a second interface in the second running environment, wherein the first computing capacity information of the first processing unit is determined based on the computing capacity information of the second processing unit;
when second computing capacity information of the first processing unit does not match the first computing capacity information, determining, in the second running environment, a fourth processing unit based on computing capacity information of a second task and the first computing capacity information, wherein the second computing capacity information is determined based on the computing capacity information of the third processing unit, and the second task is a task to be run on the first processing unit; and
running, in the second running environment, the second task by using the fourth processing unit.

8. The method according to claim 7, wherein the second interface comprises a virtual interrupt or a virtual advanced configuration and power management interface ACPI event, and the virtual interrupt or the virtual ACPI event indicates that the computing capacity information of the first processing unit is updated.

9. The method according to claim 7 or 8, wherein the method further comprises:
updating the first computing capacity information to first storage space in the second running environment.

10. The method according to any one of claims 7 to 9, wherein the method further comprises:
determining, in the first running environment, that the first computing capacity information does not match the second computing capacity information; and
calling, in the first running environment, the second interface, to switch from the first running environment to the second running environment.

11. The method according to any one of claims 7 to 10, wherein the first computing capacity information and the second computing capacity information are stored in the shared memory, and the shared memory is accessed by the computing device running in the first running environment or the second running environment.

12. The method according to claim 11, wherein the shared memory comprises the model-specific register MSR or the system register.

13. A coordinated scheduling method, comprising:
obtaining first computing capacity information of a first processing unit in a second running environment based on a second interface in the second running environment, wherein the first processing unit migrates from a third processing unit in a first running environment to a second processing unit in the first running environment for running, and the first computing capacity information is determined based on computing capacity information of the second processing unit;
when second computing capacity information of the first processing unit does not match the first computing capacity information, determining, in the second running environment, a fourth processing unit based on computing capacity information of a second task and the first computing capacity information, wherein the second computing capacity information is determined based on computing capacity information of the third processing unit, the second task is a task to be run on the first processing unit, and the computing capacity information of the second task indicates a minimum computing capacity of a processing unit that runs the second task; and
running, in the second running environment, the second task by using the fourth processing unit.

14. The method according to claim 13, wherein the second interface comprises a virtual interrupt or a virtual advanced configuration and power management interface ACPI event, and the virtual interrupt or the virtual ACPI event indicates that the computing capacity information of the first processing unit is updated.

15. The method according to claim 13 or 14, wherein the method further comprises:
updating the first computing capacity information to first storage space in the second running environment.

16. The method according to any one of claims 13 to 15, wherein the method further comprises:
determining, in the first running environment, that the first computing capacity information does not match the second computing capacity information; and
calling, in the first running environment, the second interface, to switch from the first running environment to the second running environment.

17. The method according to any one of claims 13 to 16, wherein the first computing capacity information and the second computing capacity information are stored in a shared memory, and the shared memory is accessed by a computing device running in the first running environment or the second running environment.

18. The method according to claim 17, wherein the shared memory comprises a model-specific register MSR or a system register.

19. A computing apparatus, comprising:
a receiving module, configured to receive first information through a first interface in a first running environment, wherein the first information comprises computing capacity information of a first task, the first task is a task to be run on a first processing unit in a second running environment, and the computing capacity information of the first task indicates a minimum computing capacity of a processing unit that runs the first task; and
a processing module, configured to: when the computing capacity information of the first task does not match computing capacity information of the first processing unit, determine, in the first running environment, a second processing unit based on the computing capacity information of the first task, wherein the computing capacity information of the first processing unit is determined based on computing capacity information of a third processing unit, and the third processing unit is configured to run, in the first running environment, the first processing unit, wherein
the processing module is further configured to run, in the first running environment, the first processing unit by using the second processing unit.

20. The apparatus according to claim 19, wherein the first interface comprises a hypercall hypercall interface.

21. The apparatus according to claim 19 or 20, wherein the apparatus further comprises a first determining module, and the first determining module is configured to:
determine, in the second running environment, that the computing capacity information of the first task does not match the computing capacity information of the first processing unit; and
call, in the second running environment, the first interface, to switch from the second running environment to the first running environment.

22. The apparatus according to any one of claims 19 to 21, wherein the processing module is further configured to update, in the first running environment, the computing capacity information of the first processing unit based on computing capacity information of the second processing unit.

23. The apparatus according to any one of claims 19 to 22, wherein the computing capacity information of the first processing unit is stored in a shared memory, and the shared memory is accessed by the apparatus running in the first running environment or the second running environment.

24. The apparatus according to claim 23, wherein the shared memory comprises a model-specific register MSR or a system register.

25. The apparatus according to any one of claims 19 to 24, wherein the apparatus further comprises a second determining module, and the second determining module is further configured to:
obtain first computing capacity information of the first processing unit based on a second interface in the second running environment, wherein the first computing capacity information of the first processing unit is determined based on the computing capacity information of the second processing unit;
when second computing capacity information of the first processing unit does not match the first computing capacity information, determine, in the second running environment, a fourth processing unit based on computing capacity information of a second task and the first computing capacity information, wherein the second computing capacity information is determined based on the computing capacity information of the third processing unit, and the second task is a task to be run on the first processing unit; and
run, in the second running environment, the second task by using the fourth processing unit.

26. The apparatus according to claim 25, wherein the second interface comprises a virtual interrupt or a virtual advanced configuration and power management interface ACPI event, and the virtual interrupt or the virtual ACPI event indicates that the computing capacity information of the first processing unit is updated.

27. The apparatus according to claim 25 or 26, wherein the second determining module is further configured to update the first computing capacity information to first storage space in the second running environment.

28. The apparatus according to any one of claims 25 to 27, wherein the processing module is further configured to:
determine, in the first running environment, that the first computing capacity information does not match the second computing capacity information; and
call, in the first running environment, the second interface, to switch from the first running environment to the second running environment.

29. The apparatus according to any one of claims 25 to 28, wherein the first computing capacity information and the second computing capacity information are stored in the shared memory, and the shared memory is accessed by the apparatus running in the first running environment or the second running environment.

30. The apparatus according to claim 29, wherein the shared memory comprises the model-specific register MSR or the system register.

31. A computing apparatus, comprising:
an obtaining module, configured to obtain first computing capacity information of a first processing unit in a second running environment based on a second interface in the second running environment, wherein the first processing unit migrates from a third processing unit in a first running environment to a second processing unit in the first running environment for running, and the first computing capacity information is determined based on computing capacity information of the second processing unit; and
a processing module, configured to: when second computing capacity information of the first processing unit does not match the first computing capacity information, determine, in the second running environment, a fourth processing unit based on computing capacity information of a second task and the first computing capacity information, wherein the second computing capacity information is determined based on computing capacity information of the third processing unit, the second task is a task to be run on the first processing unit, and the computing capacity information of the second task indicates a minimum computing capacity of a processing unit that runs the second task, wherein
the processing module is further configured to run, in the second running environment, the second task by using the fourth processing unit.

32. The apparatus according to claim 31, wherein the second interface comprises a virtual interrupt or a virtual advanced configuration and power management interface ACPI event, and the virtual interrupt or the virtual ACPI event indicates that the computing capacity information of the first processing unit is updated.

33. The apparatus according to claim 31 or 32, wherein the processing module is further configured to update the first computing capacity information to first storage space in the second running environment.

34. The apparatus according to any one of claims 31 to 33, wherein the apparatus further comprises a determining module, and the determining module is configured to:
determine, in the first running environment, that the first computing capacity information does not match the second computing capacity information; and
call, in the first running environment, the second interface, to switch from the first running environment to the second running environment.

35. The apparatus according to any one of claims 31 to 34, wherein the first computing capacity information and the second computing capacity information are stored in the shared memory, and the shared memory is accessed by the apparatus running in the first running environment or the second running environment.

36. The apparatus according to claim 35, wherein the shared memory comprises a model-specific register MSR or a system register.

37. A computer device, comprising a processor, wherein the processor is configured to: be coupled to a memory, and read and execute instructions and/or program code in the memory, to perform the method according to any one of claims 1 to 18.

38. A chip system, comprising a logic circuit, wherein the logic circuit is configured to: be coupled to an input/output interface, and transmit data through the input/output interface, to perform the method according to any one of claims 1 to 18.

39. A computer-readable medium, wherein the computer-readable medium stores program code, and when the computer program code is run on a computer, the computer is enabled to perform the method according to any one of claims 1 to 18.
